# EUROPÄISCHE PATENTSCHRIFT

(11) **EP 4 010 145 B1**
(45) Veröffentlichungstag und Bekanntmachung des Hinweises auf die Patenterteilung: **18.10.2023**
(21) Anmeldenummer: 21773311.2
(22) Anmeldetag: 02.09.2021
(51) Int. Cl.: B23K 26/03, B23K 31/12, B23K 26/044

(54) **VERFAHREN ZUM ANALYSIEREN EINER WERKSTÜCKOBERFLÄCHE FÜR EINEN LASERBEARBEITUNGSPROZESS UND EINE ANALYSEVORRICHTUNG ZUM ANALYSIEREN EINER WERKSTÜCKOBERFLÄCHE**
METHOD FOR ANALYZING A WORKPIECE SURFACE FOR A LASER MACHINING PROCESS, AND ANALYSIS DEVICE FOR ANALYZING A WORKPIECE SURFACE
PROCÉDÉ D'ANALYSE DE LA SURFACE D'UNE PIÈCE DANS LE CADRE D'UN PROCESSUS D'USINAGE LASER ET DISPOSITIF D'ANALYSE DESTINÉ À ANALYSER LA SURFACE D'UNE PIÈCE

(30) Priorität: 02.09.2020 DE 102020122924
(43) Veröffentlichungstag der Anmeldung: 15.06.2022
(73) Patentinhaber: Precitec GmbH & Co. KG, 76571 Gaggenau-Bad Rotenfels (DE)
(72) Erfinder: JOACHIM, Schwarz, 8451 Kleinandelfingen (CH)
(74) Vertreter: Ter Meer Steinmeister & Partner
(86) Internationale Anmeldenummer: PCT/EP2021/074208
(87) Internationale Veröffentlichungsnummer: WO 2022/049169

(56) Entgegenhaltungen:
- EP-B1- 1 448 334
- DE-A1-102011 012 729
- DE-A1-102011 104 550
- DE-A1-102012 104 745
- DE-A1-102020 201 097

## Beschreibung

Die vorliegende Erfindung betrifft ein Verfahren zum Analysieren einer Werkstückoberfläche für einen Laserbearbeitungsprozess und eine Analysevorrichtung zum Analysieren einer Werkstückoberfläche. Die vorliegende Erfindung betrifft ferner ein Verfahren zum Bearbeiten eines Werkstücks mittels eines Laserstrahls, das ein solches Verfahren umfasst, und einen Laserbearbeitungskopf mit einer solchen Analysevorrichtung (siehe, z.B. DE 10 2011 104550 A1).

### Hintergrund und Stand der Technik

In einem Laserbearbeitungssystem zur Bearbeitung eines Werkstücks mittels eines Laserstrahls wird der von einer Laserlichtquelle oder einem Ende einer Laserleitfaser austretende Laserstrahl mit Hilfe einer Strahlführungs- und Fokussieroptik auf das zu bearbeitende Werkstück fokussiert oder gebündelt. Die Bearbeitung kann Verfahren zum Fügen von Werkstücken umfassen, beispielsweise ein Laserschweißen oder ein Laserlöten. Das Laserbearbeitungssystem kann eine Laserbearbeitungsvorrichtung, beispielsweise einen Laserbearbeitungskopf, insbesondere einen Laserschweißkopf, umfassen. Zur Qualitätssicherung und zur Regelung, ist es erforderlich, den Laserbearbeitungsprozess zu überwachen.

Aktuelle Lösungen für die Überwachung von Laserbearbeitungsprozessen umfassen "Pre-Prozess"-, "In-Prozess"- und "Post-Prozess"-Überwachungsprozesse bzw. -systeme. Die Pre-Prozess-Überwachung hat beim Fügen die Aufgabe, eine Fügestelle, insbesondere einen Fügespalt, zu detektieren, um den Laserstrahl an die entsprechende Position zu führen bzw. um einen Versatz der Fügepartner zu ermitteln. Die In-Prozess- und Post-Prozess-Überwachung werden typischerweise eingesetzt, um den Laserbearbeitungsprozess zu überwachen und um die Qualität der entstandenen Verbindung zu sichern. Insbesondere die Post-Prozess-Überwachung, auch "Post-Prozess-Inspektion" genannt, wird zur Qualitätsüberwachung eingesetzt, da mit ihrer Hilfe die entstandene Schweißnaht inspiziert und anhand von geltenden Normen (z.B. "SEL100") vermessen werden kann. Die zu messenden Größen bzw. Merkmale sind typischerweise ein Kantenversatz, ein Anbindungsquerschnitt sowie eine Konkavität bzw. Konvexität und eine Unterwölbung bzw. Überwölbung der Schweißnaht. Die Beschichtung von hochfesten Stählen und das vor dem Schweißen notwendige Abtragen der Beschichtung führt zur zusätzlichen Anforderung einer Beschichtungs- bzw. Abtragungsmessung bei der Überwachung des Laserbearbeitungsprozessen.

Für diese Aufgabenstellungen werden heutzutage 3D-Verfahren eingesetzt, um ein dreidimensionales Höhenprofil einer Werkstückoberfläche, auch "Geometrie" genannt, zu erfassen. Dazu werden typischerweise Lasertriangulationsverfahren bzw. Laserlichtschnittverfahren und -vorrichtungen, insbesondere Scheimpflugsensoren, verwendet. Dabei wird ein fächerförmiger, also in nur einer Ebene aufgespreizter, Lichtstrahl auf die Werkstückoberfläche eingestrahlt, um dort eine Lichtlinie zu erzeugen. In einem Winkel zur Einstrahlungsrichtung wird von der Lichtlinie mittels eines Bildsensors ein Bild aufgenommen. Das aufgenommene Bild wird anschließend ausgewertet, um eine Lage und/oder Form der Lichtlinie in dem Bild zu detektieren. Darauf basierend kann auf die Geometrie der Werkstückoberfläche geschlossen werden.

Ferner werden 2D-Verfahren eingesetzt, wobei Bilder, insbesondere Graubilder, der Werkstückoberfläche aufgenommen werden und mittels Bildverarbeitung eine Oberflächenanalyse durchgeführt wird. Dadurch kann die Erkennung der Schweißnaht und weiteren Merkmalen der Werkstückoberfläche verbessert werden. Beispielsweise können Unregelmäßigkeiten der Schweißnahtoberfläche und kleine Poren detektiert werden und die Schweißnaht kann dadurch sicher von der unbearbeiteten Werkstückoberfläche unterschieden bzw. segmentiert werden. In der Praxis wird die Aufnahme eines Bildes der Werkstückoberfläche parallel oder gleichzeitig zum Laserlichtschnittverfahren durch folgende Gegebenheiten erschwert.

Einerseits hat die Aufnahme eines Bildes mit einem parallel zur Werkstückoberfläche ausgerichteten Bildsensor, d.h. bei einer zur Werkstückoberfläche parallelen Abbildung, den Nachteil einer sehr geringen Schärfentiefe in einer Richtung senkrecht zur Werkstückoberfläche. Dies führt zu einem hohen Aufwand bei der Auswertung und bei der Ausrichtung des Bildsensors und erfordert beispielsweise für eine parallele Abbildung mit Zusatzbeleuchtung eine hochgenaue Spannvorrichtung.

Andererseits liefert ein Graubild, das basierend auf der Intensität der von der Werkstückoberfläche reflektierten Laserlinie durch einen für das Laserlichtschnittverfahren verwendeten Bildsensor erstellt wird, wie beispielsweise in DE 10 2011 012 729 A1 beschrieben, oft nur kontrastarme Graubilder der Werkstückoberfläche, da die maximale Intensität der Laserlinie meist in dem Sättigungsbereich des Bildsensors liegt. Gleichermaßen hat eine Graubildgewinnung basierend auf dem Streulicht der Laserlinie den Nachteil, dass wenig Kontrast erreicht wird. Zudem führt der typische "Speckle"-Effekt der Laserlinie zu einer inhomogenen Beleuchtung der Werkstückoberfläche. Eine Zusatzbeleuchtung der Werkstückoberfläche kann diesen Nachteil nicht ausräumen, da der Schärfentiefenbereich in einer Ebene parallel zur Werkstückoberfläche sehr klein und zusätzlich noch dadurch eingeschränkt ist, dass die helle Laserlinie in diesem Bereich liegt. Somit führt auch eine Kombination des Laserlichtschnittverfahrens mit einer Zusatzbeleuchtung und einer parallelen Abbildung, wie in EP 1 448 334 A1 beschrieben, nur zu einer geringen Schärfentiefe.

### Zusammenfassung der Erfindung

Es ist eine Aufgabe der Erfindung, ein Verfahren bereitzustellen, mit dem sowohl die Erfassung eines dreidimensionalen Höhenprofils der Werkstückoberfläche als auch die Aufnahme eines zweidimensionalen Bildes der Werkstückoberfläche ermöglicht wird. Es ist ferner eine Aufgabe der Erfindung, ein Verfahren bereitzustellen, welches die Aufnahme eines zweidimensionalen Bildes, insbesondere eines Graubildes, von einer Werkstückoberfläche bei großer Schärfentiefe parallel oder gleichzeitig zu einem Lichtschnittverfahren zur dreidimensionalen Datenerfassung ermöglicht.

Es ist zudem eine Aufgabe der Erfindung, ein Verfahren bereitzustellen, mit dem ein Kontrast und eine Schärfentiefe beim Aufnehmen eines Bildes von einer Werkstückoberfläche, insbesondere parallel oder gleichzeitig zu einem Lichtschnittverfahren, verbessert werden. Es ist ferner eine Aufgabe der Erfindung, ein Verfahren bereitzustellen, mit dem eine hohe Profilscanrate beim Auslesen des Bildsensors erreicht werden kann.

Schließlich ist es eine Aufgabe der Erfindung, eine Vorrichtung anzugeben, die zum Durchführen des Verfahrens eingerichtet ist.

Die zuvor beschriebenen Aufgaben werden durch den Gegenstand der unabhängigen Ansprüche gelöst. Vorteilhafte Ausgestaltungen und Weiterbildungen sind Gegenstand abhängiger Ansprüche.

Die Erfindung beruht auf dem Gedanken, für die dreidimensionale Erfassung einer Werkstückoberfläche mittels eines Lichtschnitt- bzw. Lichtschnitt-Triangulationsverfahrens eine Sensorvorrichtung mit einem Bildsensor und einer Optik zu verwenden, wobei die Optik unterschiedliche Brechungsindizes für Licht eines ersten Wellenlängenbereichs und Licht eines zweiten Wellenlängenbereichs aufweist. Dadurch weist die Optik für die beiden Wellenlängenbereiche verschiedene Fokusebenen auf, die durch die Optik in einer Scheimpfluganordnung scharf auf eine Sensorebene des Bildsensors abgebildet werden. Diese Eigenschaft der Optik kann genutzt werden, um parallel zur Aufnahme eines scharfen Bildes von einer von der Werkstückoberfläche reflektierten Lichtlinie zum Durchführen des Lichtschnittverfahrens ein scharfes Bild von einem Teilbereich der Werkstückoberfläche aufzunehmen, der von der Lichtlinie beabstandet ist. Mithilfe der vorliegenden Erfindung wird der für Licht des zweiten Wellenlängenbereichs scharf abgebildete Teilbereich der Werkstückoberfläche von der scharf abgebildeten Lichtlinie des ersten Wellenlängenbereichs auf der Sensorebene räumlich getrennt. Demnach muss die Sensorvorrichtung keine Farbfilter umfassen und zur Erfassung eines Höhenprofils der Werkstückoberfläche und zur Aufnahme eines Graubildes der Werkstückoberfläche kann derselbe Bildsensor bzw. dieselbe Sensorvorrichtung verwendet werden. Zudem kann von einem ersten Teilbereich der Werkstückoberfläche ein Höhenprofil und gleichzeitig von einem zweiten Teilbereich der Werkstückoberfläche ein Graubild erstellt werden. Durch wiederholtes Aufnehmen des Bildes, d.h. durch Abtasten bzw. Scannen der Werkstückoberfläche, und unter Berücksichtigung des bekannten Versatzes können die Höhenprofildaten und die Graubilddaten entsprechend zusammengeführt werden, um von ein und demselben Bereich der Werkstückoberfläche ein dreidimensionales Höhenprofil und ein zweidimensionales Graubild mit großer Schärfentiefe zu erhalten. Bei roter Beleuchtung kann die Schärfentiefe des erzeugten Graubildes von ca. ±0,5 mm auf ca. ±5mm erhöht werden, bei einer 1:1 Abbildung auf einen Zoll Sensor, bei welcher der Bildbereich von 10mm x10mm ungefähr der Sensorgröße entspricht.

Gemäß einem ersten Aspekt der vorliegenden Erfindung ist ein Verfahren zum Analysieren einer Werkstückoberfläche für einen Laserbearbeitungsprozess angegeben. Das Verfahren umfasst die folgenden Schritte: Einstrahlen einer Lichtlinie von Licht eines ersten Wellenlängenbereichs in einen Bereich der Werkstückoberfläche und Beleuchten des Bereichs der Werkstückoberfläche mit Licht mindestens eines zweiten Wellenlängenbereichs; Aufnehmen eines Bildes des Bereichs der Werkstückoberfläche mittels einer Sensorvorrichtung, die einen Bildsensor und eine Optik zum Abbilden auf den Bildsensor umfasst, wobei die Optik unterschiedliche Brechungsindizes für den ersten und zweiten Wellenlängenbereich aufweist, und wobei der Bildsensor (bzw. eine Sensorebene des Bildsensors), die Optik und eine erste Ebene, die durch die Lichtlinie und einen Lichtaustrittspunkt des Lichts des ersten Wellenlängenbereichs definiert ist, in Scheimpfluganordnung angeordnet sind, und Auswerten des Bildes zum Analysieren von Merkmalen der Werkstückoberfläche, basierend auf einem vorgegebenen Versatz zwischen der ersten Ebene und einer zweiten Ebene, für die das Licht des zweiten Wellenlängenbereichs von der Optik, insbesondere scharf bzw. fokussiert, auf den Bildsensor (bzw. auf die Sensorebene des Bildsensors) abgebildet wird.

Mit anderen Worten umfasst ein Verfahren gemäß dem ersten Aspekt die Schritte: Einstrahlen eines ebenen fächerförmigen Lichtstrahls von Licht eines ersten Wellenlängenbereichs zum Erzeugen einer Lichtlinie in einem Bereich der Werkstückoberfläche und Beleuchten des Bereichs der Werkstückoberfläche mit Licht eines zweiten Wellenlängenbereichs; Aufnehmen eines Bildes des Bereichs der Werkstückoberfläche mittels einer Sensorvorrichtung, die einen Bildsensor und eine Optik zum Abbilden von Licht auf den Bildsensor umfasst, wobei die Optik unterschiedliche Brechungsindizes für den ersten und zweiten Wellenlängenbereich aufweist, und wobei eine erste Ebene, die durch die Ebene des fächerförmigen Lichtstrahls definiert ist, die Optik und der Bildsensor in Scheimpfluganordnung angeordnet sind; und Auswerten des Bildes zum Analysieren von Merkmalen der Werkstückoberfläche basierend auf einem vorgegebenen Versatz auf der Werkstückoberfläche zwischen der ersten Ebene und einer zweiten Ebene, für die das Licht des zweiten Wellenlängenbereichs von der Optik auf dem Bildsensor abgebildet wird.

Die erste Ebene, die Optik und der Bildsensor bzw. eine Sensorebene des Bildsensors sind in Scheimpfluganordnung angeordnet und erfüllen somit die Scheimpflugbedingung. Mit anderen Worten haben die erste Ebene, eine Ebene senkrecht zur optischen Achse durch die Optik und die Sensorebene des Bildsensors eine gemeinsame Schnittgerade. Die zweite Ebene, die Optik und die Sensorebene des Bildsensors können entsprechend ebenfalls in einer Scheimpfluganordnung angeordnet sein.

Der erste Wellenlängenbereich und der zweite Wellenlängenbereich sind voneinander verschieden und/oder beabstandet. Vorzugsweise liegen die beiden Wellenlängenbereiche so verschieden, dass ein ausreichender Versatz gewährleistet werden kann. Der erste Wellenlängenbereich und der zweite Wellenlängenbereich können relativ schmale Wellenlängenbereiche sein, beispielsweise können die Wellenlängenbereiche weniger als 50 oder sogar weniger als 30 nm breit sein. Ein Abstand zwischen dem ersten und zweiten Wellenlängenbereich kann 100 nm oder mehr betragen. Licht des ersten Wellenlängenbereichs kann blaues Licht, vorzugsweise Licht mit einer Wellenlänge in einem Wellenlängenbereich von 400 nm bis 500 nm, insbesondere Licht mit einer Wellenlänge von 450 nm, umfassen oder sein. Licht des zweiten Wellenlängenbereichs kann rotes Licht, vorzugsweise Licht mit einer Wellenlänge in einem Wellenlängenbereich von 600 nm bis 700 nm, insbesondere Licht mit einer Wellenlänge von 660 nm, umfassen oder sein. Der Bildsensor ist für beide Wellenlängenbereiche empfindlich.

Das Einstrahlen einer Lichtlinie von Licht eines ersten Wellenlängenbereichs kann das Einstrahlen eines ebenen fächerförmigen Lichtstrahls zum Erzeugen der Lichtlinie auf der Werkstückoberfläche umfassen. Die erste Ebene kann einer Ebene des fächerförmigen Lichtstrahls entsprechen. Mit anderen Worten kann die erste Ebene durch die Lichtlinie und einen Lichtaustrittspunkt des Lichts des ersten Wellenlängenbereichs (insbesondere einen Lichtaustrittspunkt des Lichts aus einer Beleuchtungseinheit) definiert sein. Die erste Ebene kann einer Fokusebene der Optik für den ersten Wellenlängenbereich entsprechen, bzw. einer Ebene, für die das Licht des ersten Wellenlängenbereichs von der Optik (scharf bzw. fokussiert) auf dem Bildsensor bzw. auf der Sensorebene des Bildsensors abgebildet wird. Die erste Ebene ist vorzugsweise senkrecht zur Werkstückoberfläche angeordnet. Die erste Ebene kann die Lichtlinie für ein Lichtschnitt- bzw. Triangulationsverfahren umfassen. Die erste Ebene kann daher auch als "Triangulationsebene" bezeichnet werden. Die zweite Ebene kann einer Fokusebene der Optik für den zweiten Wellenlängenbereich entsprechen.

Die erste und/oder die zweite Ebene kann die Werkstückoberfläche schneiden. Die erste Ebene kann die Werkstückoberfläche in einer ersten Schnittlinie schneiden. Die zweite Ebene kann die Werkstückoberfläche in einer zweiten Schnittlinie schneiden. Die erste und die zweite Schnittlinie sind voneinander beabstandet. Der Abstand der beiden Schnittlinien kann auch als Versatz bezeichnet werden.

Zudem ist jeweils ein gewisser Schärfentiefenbereich vorhanden, innerhalb dessen Punkte von der Optik für Licht des ersten Wellenlängenbereichs bzw. für Licht des zweiten Wellenlängenbereichs für die nachfolgende Bildauswertung hinreichend scharf auf dem Bildsensor abgebildet werden. Demnach wird ein erster Teilbereich der Werkstückoberfläche, der eine Schnittlinie der ersten Ebene mit der Werkstückoberfläche umgibt, und ein zweiter Teilbereich der Werkstückoberfläche, der die Schnittlinie der zweiten Ebene mit der Werkstückoberfläche umgibt, scharf auf dem Bildsensor abgebildet. Der erste Teilbereich kann den Schärfentiefenbereich der Optik für Licht der ersten Wellenlänge umfassen oder diesem entsprechen. Der zweite Teilbereich kann den beschriebenen Schärfentiefenbereich der Optik für Licht der zweiten Wellenlänge umfassen oder diesem entsprechen. Der die erste Schnittlinie umgebende Bereich der Werkstückoberfläche kann auch als erster Schärfe- oder Teilbereich bezeichnet werden. Entsprechend kann der die zweite Schnittlinie umgebende Bereich der Werkstückoberfläche auch als zweiter Schärfe- oder Teilbereich bezeichnet werden. Der Versatz ist vorzugsweise so gewählt, dass beide Teilbereiche voneinander beabstandet sind. Basierend auf dem Versatz und einer vorgegebenen oder bekannten Schärfentiefe der Optik für Licht des ersten Wellenlängenbereichs bzw. für Licht des zweiten Wellenlängenbereichs kann der Abstand zwischen dem ersten Teilbereich und dem zweiten Teilbereich der Werkstückoberfläche angegeben werden. Demnach liegt die Lichtlinie des ersten Wellenlängenbereichs nicht im für Licht des zweiten Wellenlängenbereichs scharf abgebildeten zweiten Teilbereich. Da die Lichtlinie, z.B. eine Laserlichtlinie, nicht im zweiten Teilbereich liegt, wird die Aufnahme des Bildes von der Werkstückoberfläche in diesem Bereich nicht von der hellen Lichtlinie gestört. Dadurch wird ein Kontrast des aufgenommenen Bildes in dem zweiten Teilbereich nicht von einer Intensität der Lichtlinie gestört. Somit kann ein Kontrast in dem aufgenommenen Bild für den zweiten Teilbereich der Werkstückoberfläche erhöht werden. Die vorliegende Erfindung ermöglicht es also, den Vorteil eines großen Messbereichs der Scheimpfluganordnung für die Aufnahme eines Bildes zu nutzen.

Der vorgegebene Versatz kann ein vorbestimmter oder bekannter Versatz sein. Der Versatz ist abhängig von den jeweiligen Brechungsindizes der Optik für den ersten und zweiten Wellenlängenbereich, den ersten und zweiten Wellenlängenbereichen und/oder der Anordnung der Optik relativ zur Werkstückoberfläche. Die Anordnung der Optik kann einen Abstand und/oder eine Orientierung der Optik relativ zur Werkstückoberfläche angeben. Der Versatz kann modelliert oder berechnet werden oder durch eine Kalibriermessung bestimmt werden. Der Versatz kann in Bezug auf die Werkstückoberfläche, z.B. als Abstand zwischen der ersten und der zweiten Schnittlinie, oder entlang einer optischen Achse der Optik angegeben werden.

Zusätzlich zu Licht eines zweiten Wellenlängenbereichs zur Erzeugung des zweiten Teilbereichs auf der Werkstückoberfläche kann das Verfahren dahingehend erweitert werden, dass mit mindestens einem weiteren, d.h. einem dritten Wellenlängenbereich beleuchtet wird, dessen Abbildung eine Fokusdistanzverschiebung verursacht, welche innerhalb der Schärfentiefe des zweiten Wellenlängenbereichs liegt. Damit kann die Oberfläche, welche scharf abgebildet wird, vergrößert werden. Vorzugsweise ist mindestens eine weitere Beleuchtungseinheit vorgesehen, die eingerichtet ist, die Werkstückoberfläche mit Licht eines dritten Wellenlängenbereichs zu beleuchten. Alternativ kann die Beleuchtungseinheit eingerichtet sein, die Werkstückoberfläche mit Licht des zweiten Wellenlängenbereichs und eines dritten Wellenlängenbereichs zu beleuchten. Zentrale Wellenlängen des zweiten Wellenlängenbereichs und des dritten Wellenlängenbereichs sind vorzugsweise voneinander beabstandet bzw. zueinander versetzt. Vorzugsweise überlappen sich die zur Beleuchtung verwendeten Wellenlängenbereiche, d.h. insbesondere der zweite Wellenlängenbereich und der dritten Wellenlängenbereich, nicht, sondern grenzen aneinander an oder sind voneinander beabstandet. Durch Beleuchten mit Licht des dritten Wellenlängenbereichs kann eine dritte Ebene, für die das Licht des dritten Wellenlängenbereichs von der Optik auf dem Bildsensor abgebildet wird, bzw. ein dritter Teilbereich auf der Werkstückoberfläche, der eine Schnittlinie der dritten Ebene mit der Werkstückoberfläche umgibt, erzeugt werden. Die Optik weist vorzugsweise unterschiedliche Brechungsindizes für jede der zur Beleuchtung verwendeten Wellenlängenbereiche, d.h. insbesondere für den zweiten Wellenlängenbereich und den dritten Wellenlängenbereich, auf. Beim Auswerten des Bildes kann zusätzlich ein vorgegebener Versatz auf der Werkstückoberfläche zwischen der ersten Ebene und der dritten Ebene berücksichtigt werden. Das Auswerten des Bildes kann ferner das Auswerten von Intensitätsdaten von Licht des dritten Wellenlängenbereichs in einem dem dritten Teilbereich entsprechenden Bereich des Bildes umfassen, um ein Graubild des dritten Teilbereichs zu erhalten. Dies kann für beliebig viele zur Beleuchtung verwendeten Wellenlängenbereiche gelten. Insbesondere können die mehreren zur Beleuchtung verwendeten Wellenlängenbereiche so gewählt sein, dass die entsprechenden Teilbereiche auf der Werkstückoberfläche aneinander angrenzen. Mit anderen Worten können die mehreren zur Beleuchtung verwendeten Wellenlängenbereiche so gewählt sein, dass der Versatz der Fokusdistanz bei scharfer Abbildung dem Schärfentiefenbereich entspricht. Dann grenzen die scharf abgebildeten Werkstückoberflächen der verschiedenen Wellenlängen aneinander. Vorzugsweise weist die Beleuchtungseinheit ein kontinuierliches Spektrum auf, aus dem der erste Wellenlängenbereich entfernt wurde, z.B. durch einen Filter. Unter Verwendung eines kontinuierlichen Spektrums der Beleuchtungseinheit, welche mit einem Filter, beispielsweise mit einem Kantenfilter oder einem Notch-Filter, den ersten Wellenlängenbereich abschneidet, kann ein kontinuierlicher Bereich der Oberfläche scharf abgebildet werden. Dieser Bereich wird begrenzt durch die Schärfentiefe der Optik unabhängig vom chromatischen Abbildungsfehler.

Der Bereich um die Laserlinie kann also innerhalb des Schärfentiefenbereichs scharf abgebildet werden, unabhängig von der Tiefe des Werkstücks. Ebenen, erzeugt über eine Beleuchtung mit zueinander verschobenen Wellenlängenbereichen und versetzt zur Laserlinienwellenlänge (d.h. zum ersten Wellenlängenbereich), können aufgrund des Farbfehlers der Optik ebenfalls scharf abgebildet werden. Somit kann eine scharf abgebildete Werkstückoberfläche vergrößert werden.

Die Sensorebene des Bildsensors kann eine Sensorfläche des Bildsensors umfassen, auf die Licht eingestrahlt wird, um ein Bild aufzunehmen.

Das Aufnehmen des Bildes kann basierend auf von der Werkstückoberfläche reflektiertem Licht erfolgen. Das aufgenommene Bild kann ein Farbbild, ein Helligkeitsbild und/oder ein Intensitätsbild sein oder umfassen.

Das Auswerten des aufgenommenen Bildes kann ein Auswerten der Lichtintensität im ersten Wellenlängenbereich, beispielsweise durch ein Triangulationsverfahren oder Lichtschnittverfahren, zum Erzeugen eines (vorzugsweise dreidimensionalen) Höhenprofils der Werkstückoberfläche und/oder ein Auswerten der Lichtintensität im zweiten Wellenlängenbereich, beispielsweise durch Bildanalyse oder Bildverarbeitung, zum Erzeugen eines zweidimensionalen Graubildes umfassen. Das Auswerten des Bildes kann ein zeilenweises und/oder spaltenweises Auswerten des Bildes umfassen.

Das Auswerten des Bildes kann ein Auswerten von in dem Bild enthaltenen Helligkeits- oder Intensitätsinformationen über Licht des ersten Wellenlängenbereichs, welches von der Werkstückoberfläche reflektiert wurde, umfassen. Das Auswerten des Bildes kann das Erfassen einer Position und Lage der im Bild abgebildeten Lichtlinie umfassen. Darauf basierend kann das Triangulations- bzw. Lichtschnittverfahren durchgeführt werden, um beispielsweise die Position, Lage, Höhe und/oder Ausdehnung von Merkmalen der Werkstückoberfläche, beispielsweise von einer Fügekante, einem Fügespalt oder einer Schweißnaht, zu erfassen.

Das Auswerten des Bildes kann ein Auswerten von in dem Bild enthaltenen Helligkeits- oder Intensitätsinformationen über Licht des zweiten Wellenlängenbereichs umfassen, welches von einem die zweite Schnittlinie umgebenden Bereich, auch zweiter Schärfe- oder Teilbereich, der Werkstückoberfläche reflektiert wurde.

Der Versatz, d.h. beispielsweise der Abstand zwischen der Schnittlinie der ersten Ebene mit der Werkstückoberfläche und der Schnittlinie der zweiten Ebene mit der Werkstückoberfläche, ist vorgegeben bzw. bekannt. Somit ist auch bekannt, an welcher Position und in welcher Lage im Bild der zweite Teilbereich der Werkstückoberfläche abgebildet ist. Daher kann das aufgenommene Bild bezüglich des zweiten Teilbereichs ausgewertet werden. Mit anderen Worten können für den abgebildeten zweiten Teilbereich Helligkeitsinformationen für Licht des zweiten Wellenlängenbereichs ausgelesen werden. Basierend darauf kann ein (scharfes) Grauwertbild des zweiten Teilbereichs erhalten werden. Somit kann eine Auswertung des ersten Teilbereichs basierend auf der Lichtlinie (z.B. basierend auf einer Form der aufgenommenen Lichtlinie) und eine Auswertung des zweiten Teilbereichs basierend auf einer im zweiten Teilbereich aufgenommenen Intensitätsverteilung unabhängig voneinander oder getrennt voneinander ausgewertet werden.

Das Auswerten des aufgenommenen Bildes dient zum Analysieren von Merkmalen der Werkstückoberfläche. Die zu analysierenden Merkmale der Werkstückoberfläche können zumindest eines der folgenden umfassen: eine Geometrie, ein Höhenprofil, eine Rauigkeit, eine Farbe, Reflexionseigenschaften der Werkstückoberfläche, eine Fügekante, ein Kantenversatz oder einen Fügespalt zwischen zwei Werkstücken, eine Werkstückstufe, eine Schweißnaht und eine Schnittkante. Beispielsweise kann insbesondere beim Laserschweißen eine Schweißnaht analysiert werden, insbesondere hinsichtlich ihrer Position oder Lage auf der Werkstückoberfläche, Reflexionseigenschaften der Schweißnaht, einer Höhe und/oder Breite der Schweißnaht, ein Anbindungsquerschnitt zwischen verschweißten Werkstücken, eine Konkavität bzw. Konvexität der Schweißnaht sowie eine Unterwölbung und Überwölbung der Schweißnaht. Beim Laserschneiden kann beispielsweise eine Schnittkante analysiert werden, insbesondere hinsichtlich ihrer Position oder Lage auf der Werkstückoberfläche, einer Rauigkeit oder einer Neigung der Schnittkante, etc..

Das Verfahren zum Analysieren einer Werkstückoberfläche für einen Laserbearbeitungsprozess kann ferner die folgenden Schritte umfassen: Bewegen des Werkstücks relativ zur Sensorvorrichtung und Wiederholen der zuvor beschriebenen Schritte Einstrahlen der Lichtlinie von Licht eines ersten Wellenlängenbereichs in den Bereich der Werkstückoberfläche, Beleuchten des Bereichs der Werkstückoberfläche mit Licht eines zweiten Wellenlängenbereichs, Aufnehmen eines Bildes des Bereichs der Werkstückoberfläche, und Auswerten des Bildes. Mit anderen Worten können mehrere Bilder von der Werkstückoberfläche aufgenommen werden. Dadurch kann ein Graubild bzw. ein Höhenprofil von einem größeren Bereich der Werkstückoberfläche erhalten werden. Das Werkstück wird vorzugsweise in einer Ebene parallel zur Werkstückoberfläche und/oder senkrecht zu einer optischen Achse bzw. zu einer Mittellinie des eingestrahlten Lichts des ersten Wellenlängenbereichs bewegt.

Eine optische Achse der Optik und/oder eine optische Achse der Sensorvorrichtung kann mit der ersten Ebene einen spitzen Winkel bilden. Eine optische Achse der Sensorvorrichtung und/oder der Optik kann in einer Ebene liegen, die senkrecht zur Werkstückoberfläche und parallel zu einem Merkmal der Werkstückoberfläche, z.B. zu einer Schweißnaht oder Fügekante, verläuft. Vorzugsweise schneidet die optische Achse der Sensorvorrichtung und/oder der Optik das Merkmal.

Die Optik weist einen wellenlängenabhängigen Brechungsindex auf. Die Optik ist eine bezüglich des Farbfehlers nicht korrigierte Optik.

Die Optik kann zumindest ein optisches Element, beispielsweise eine Linse, mit einem solchen Farblängsfehler aufweisen. Die Optik kann bezüglich der ersten Farbe und/oder bezüglich der zweiten Farbe eine chromatische Aberration, d.h. einen Farblängsfehler, aufweisen. Somit weist die Optik unterschiedliche Brechungsindizes für die beiden Wellenlängenbereiche auf. Die Optik kann eine Linse, eine Linsengruppe, eine Fokussierlinse, eine Fokussierlinsengruppe, ein Objektiv und/oder ein Zoomobjektiv umfassen.

Die Sensorvorrichtung kann einen Scheimpflugsensor umfassen oder ein Scheimpflugsensor sein. Der Bildsensor kann zumindest eines der folgenden umfassen: einen Matrix-Bildsensor, einen zweidimensionalen optischen Sensor, einen Kamerasensor, einen CCD-Sensor, einen CMOS-Sensor, ein Photodioden-Array. Die Sensorvorrichtung kann eine CMOS-Kamera sein oder umfassen.

Das Beleuchten des Bereichs der Werkstückoberfläche mit Licht eines zweiten Wellenlängenbereichs kann großflächig und/oder ungerichtet erfolgen. Die Beleuchtungseinheit kann eine farbige LED bzw. eine LED, die im zweiten Wellenlängenbereich emittiert, umfassen. Die Beleuchtungseinheit kann eine breitbandige Lichtquelle und einen Farbfilter aufweisen, der für Licht des zweiten Wellenlängenbereichs durchlässig ist.

Die Lichtlinieneinheit kann eine durchgängige, gerade Lichtlinie bereitstellen oder erzeugen. Mit anderen Worten kann die Lichtlinieneinheit einen fächerförmigen Lichtstrahl bereitstellen. Der Lichtstrahl kann senkrecht auf die Werkstückoberfläche eingestrahlt werden. In diesem Fall kann die erste Ebene senkrecht zur Werkstückoberfläche sein. Die Lichtlinieneinheit zum Einstrahlen der Lichtlinie kann eine Laservorrichtung sein oder eine Laservorrichtung umfassen. Alternativ kann die Lichtlinieneinheit einen Lichtleiter zum Einstrahlen der Lichtlinie umfassen. Der Lichtstrahl kann ein Laserstrahl sein bzw. die Lichtlinie kann eine Laserlichtlinie sein.

Gemäß einem zweiten Aspekt der vorliegenden Erfindung ist in Anspruch 10 eine Analysevorrichtung zum Analysieren einer Werkstückoberfläche angegeben, die zum Durchführen des vorstehend beschriebenen Verfahrens eingerichtet ist.

Gemäß einem dritten Aspekt der vorliegenden Erfindung ist ein Verfahren zum Bearbeiten eines Werkstücks mittels eines Laserstrahls, insbesondere ein Laserschweißen oder ein Laserschneiden, angegeben, wobei das Verfahren umfasst: Einstrahlen eines Laserstrahls auf einen Punkt der Werkstückoberfläche entlang eines Bearbeitungspfads und das zuvor beschriebene Verfahren zum Analysieren der Werkstückoberfläche in einem Vorlauf und/oder in einem Nachlauf des Punktes entlang des Bearbeitungspfades.

Gemäß einem vierten Aspekt der vorliegenden Erfindung ist ein Laserbearbeitungskopf zum Bearbeiten eines Werkstücks, insbesondere ein Laserschweißkopf oder Laserschneidkopf mittels eines Laserstrahls angegeben, der die vorstehend beschriebene Analysevorrichtung umfasst.

### Kurzbeschreibung der Zeichnungen

Die Erfindung wird im Folgenden anhand von Figuren im Detail beschrieben.
Fig. 1 und 2 zeigen schematische Ansichten einer Analysevorrichtung zum Analysieren einer Werkstückoberfläche,
Fig. 3 zeigt schematisch und beispielhaft ein durch die Analysevorrichtung gemäß Fig. 1 und 2 aufgenommenes Bild;
Fig. 4 zeigt eine schematische Ansicht eines Bildsensors und einer Optik zur Erläuterung des Grundgedankens der vorliegenden Erfindung;
Fig. 5A zeigt eine schematische Ansicht einer Analysevorrichtung zum Analysieren einer Werkstückoberfläche gemäß Ausführungsformen der vorliegenden Erfindung;
Fig. 5B zeigt eine schematische Ansicht einer Analysevorrichtung zum Analysieren einer Werkstückoberfläche gemäß Ausführungsformen der vorliegenden Erfindung;
Fig. 6 zeigt schematisch und beispielhaft ein durch die Analysevorrichtung gemäß der vorliegenden Erfindung aufgenommenes Bild;
Fig. 7 zeigt ein Blockdiagramm eines Verfahrens zum Analysieren einer Werkstückoberfläche für einen Laserbearbeitungsprozess gemäß Ausführungsformen der vorliegenden Erfindung;
Fig. 8 zeigt eine schematische Ansicht eines Verfahrens zum Bearbeiten eines Werkstücks mittels eines Laserstrahls, welches ein Verfahren zum Analysieren einer Werkstückoberfläche gemäß Ausführungsformen umfasst;
Fig. 9 zeigt eine schematische Ansicht eines beispielhaften Graubildes, welches durch ein Verfahren zum Analysieren einer Werkstückoberfläche für einen Laserbearbeitungsprozess gemäß Ausführungsformen der vorliegenden Erfindung erhalten wurde.

### Detaillierte Beschreibung der Ausführungsformen

Im Folgenden werden, sofern nicht anders vermerkt, für gleiche und gleichwirkende Elemente dieselben Bezugszeichen verwendet.

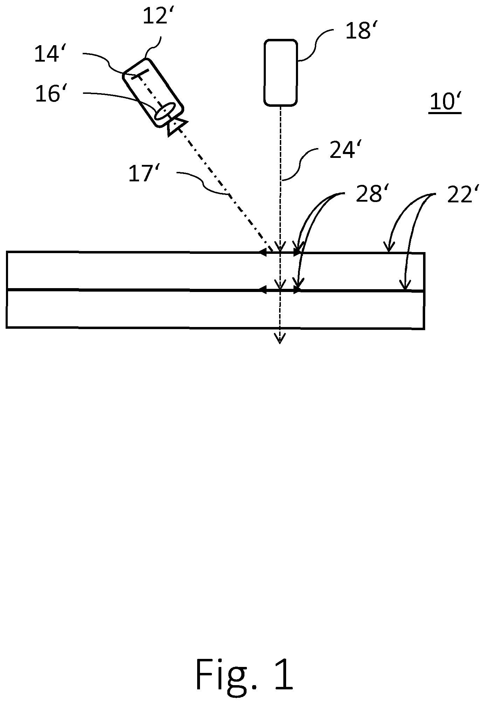

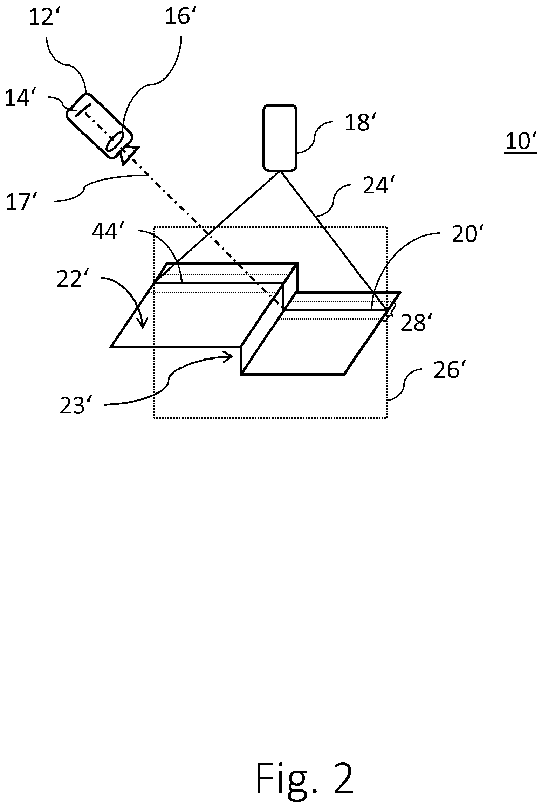

Fig. 1 und 2 zeigen zum besseren Verständnis der Erfindung schematische Ansichten einer Analysevorrichtung zum Analysieren einer Werkstückoberfläche 22`. Fig. 1 zeigt eine Seitenansicht der Analysevorrichtung und Fig. 2 zeigt eine perspektivische Ansicht der Analysevorrichtung. Ein blauer Linienlaser zur Triangulation, typischerweise 450nm, wird verwendet, um eine Objektebene (Lasertriangulationsebene) zu erzeugen in der die vom Bauteil reflektierten Laserlinien liegen. Diese Ebene wird mit einer Scheimpfluganordnung abgebildet. Abhängig von der Abbildung der Optik wird der Messbereich definiert.

Die Analysevorrichtung 10' ist eingerichtet, um ein Lichtschnittverfahren bzw. ein Lichtschnitt-Triangulationsverfahren durchzuführen, um ein dreidimensionales Höhenprofil einer Werkstückoberfläche 22' zu erfassen. Dadurch kann beispielsweise eine Fügekante oder Stufe 23` der Werkstückoberfläche 22' erkannt werden. Die Analysevorrichtung 10' kann auch als Triangulationssensor bezeichnet werden.

Die Analysevorrichtung 10' umfasst eine Sensorvorrichtung 12' mit einem Bildsensor 14' zum Aufnehmen eines Bildes und einer Optik 16' zum Abbilden von Licht auf den Bildsensor 14`. Die Analysevorrichtung 10' umfasst ferner eine Lichtlinieneinheit 18' zum Erzeugen einer Lichtlinie 20' auf der Werkstückoberfläche 22' und Erfassen eines Bildes der Lichtlinie 20`. Die Lichtlinieneinheit 18' ist eingerichtet, um einen fächerförmigen, also in nur einer Ebene aufgespreizten, Lichtstrahl 24` auf die Werkstückoberfläche 22` einzustrahlen, um die Lichtlinie 20' auf der Werkstückoberfläche 22' zu erzeugen. Eine von dem fächerförmigen Lichtstrahl 24` aufgespannte Ebene 26`, die Optik 16' und eine Sensorebene des Bildsensors 14' sind in der Scheimpfluganordnung angeordnet bzw. erfüllen die Scheimpflugbedingung. Dadurch wird die Ebene 26' von der Optik 16' scharf auf dem Bildsensor 14' abgebildet. Mit anderen Worten werden alle Punkte auf der Ebene 26` scharf auf dem Bildsensor 14' abgebildet. Da die Ebene 26` auch die Lichtlinie 20' umfasst, wird von der Werkstückoberfläche 22' reflektiertes Licht der Lichtlinie 20' ebenfalls scharf auf dem Bildsensor 14' abgebildet. Die Ebene 26` ist typischerweise senkrecht zu der Werkstückoberfläche 22' angeordnet und schneidet die Werkstückoberfläche 22`. Aufgrund der Scheimpfluganordnung entspricht eine Schnittlinie 44` der Ebene 26` mit der Werkstückoberfläche 22' der Lichtlinie 20' bzw. fällt mit der Lichtlinie 20' zusammen.

In Richtung der optischen Achse 17' der Optik 16' vor und hinter der Ebene 26` ist zudem ein gewisser Schärfentiefenbereich vorhanden, innerhalb dessen Punkte von der Optik 16' hinreichend scharf auf dem Bildsensor 14' abgebildet werden. Mit anderen Worten umgibt der Schärfentiefenbereich die erste Ebene 26`. Da die Ebene 26` die Werkstückoberfläche 22' schneidet, werden innerhalb des Schärfentiefenbereichs alle Punkte auf Ebenen, die die Ebene 26` schneiden, scharf auf dem Bild abgebildet. Demnach wird ein Teilbereich 28` der Werkstückoberfläche 22`, der die Schnittlinie 44` der Ebene 26` mit der Werkstückoberfläche 22' in Richtung der optischen Achse 17` umgibt, scharf auf den Bildsensor 14' abgebildet. Der Teilbereich 28` liegt in Richtung der optischen Achse der Optik 16' vor und hinter der Schnittlinie 44`. Der Teilbereich 28` kann auch als "Schärfebereich" bezeichnet werden, da dieser Bereich der Werkstückoberfläche 22' für die Bildauswertung hinreichend scharf im aufgenommenen Bild abgebildet wird.

Als Messbereich der Analysevorrichtung 10' kann die Ebene 26`, für die aufgrund der Scheimpfluganordnung alle Punkte scharf auf dem Bildsensor 14' abgebildet werden, und der Schärfentiefenbereich der Optik 16`, der die erste Ebene 26` in Richtung der optischen Achse der Optik 16' umgibt, definiert sein. Der Messbereich kann auch als "Objektfeld" bezeichnet werden. Die erste Ebene 26` kann auch als "Objektebene" der Sensorvorrichtung 12' bezeichnet werden. Sofern die Werkstückoberfläche 22' die Ebene 26` schneidet, wird davon reflektiertes Licht der Lichtlinie 20' ebenfalls scharf auf den Bildsensor 14' abgebildet. Der Bereich der Werkstückoberfläche 22`, die innerhalb des Objektfeldes liegen, also der Teilbereich 28`, wird ebenfalls hinreichend scharf auf den Bildsensor 14' abgebildet.

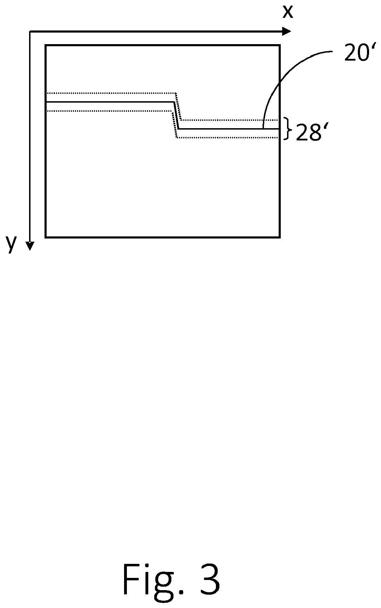

Fig. 3 zeigt schematisch und beispielhaft ein durch die Analysevorrichtung aufgenommenes Bild. Das Bild umfasst in einer Matrixanordnung eine Vielzahl von Pixeln (nicht gezeigt), die entlang einer ersten Richtung x in Spalten und entlang einer zweiten Richtung y in Zeilen angeordnet sind. Wie in Fig. 3 gezeigt, ist auf dem durch den Bildsensor 14' aufgenommenen Bild die Lichtlinie 20' abgebildet. Zudem ist der Teilbereich 28` der Werkstückoberfläche 22` markiert, der scharf auf dem Bild abgebildet ist.

Aufgrund des Farbfehlers der Optik ist die Bildweite, d.h. die Lage des Messbereichs bzw. der Objektebene, von der Wellenlänge abhängig. Das heißt, dass die Ebene 26` für unterschiedliche Wellenlängen für den Fall einer Optik 16' mit Farbfehler unterschiedlich abgebildet wird. Die Ebene 26` würde beispielsweise für Licht eines ersten Wellenlängenbereichs, beispielsweise blaues Licht mit einer Wellenlänge von ca. 450 nm, durch die Optik 16' scharf auf dem Bildsensor 14' abgebildet werden. Aufgrund des Farbfehlers der Optik 16' würde die Ebene 26` für Licht eines zweiten Wellenlängenbereichs, beispielsweise rotes Licht mit einer Wellenlänge von ca. 660 nm, jedoch nicht scharf auf dem Bildsensor 14' abgebildet werden, da bei rotem Licht die Bildweite der Optik 16' verändert ist. Es müsste die Gegenstandsweite, also ein Abstand der Optik 16' zur Ebene 26`, verändert werden, um eine scharfe Abbildung zu erhalten. Mit anderen Worten läge die Bildebene für jeden Wellenlängenbereich in einem anderen Abstand zu einer Hauptebene der nicht korrigierten Optik 16`.

Erfindungsgemäß wird der Farbfehler der Optik genutzt, um einen Schärfenbereich der Werkstückoberfläche für ein zweidimensionales Bild, insbesondere für ein Graubild, von einer Abbildung der Lichtline für die Lasertriangulation zu trennen. Gemäß der vorliegenden Erfindung wird also für die dreidimensionale Erfassung einer Werkstückoberfläche mittels eines Lichtschnittverfahrens eine Sensorvorrichtung mit einem Bildsensor und einer Optik verwendet, wobei die Optik unterschiedliche Brechungsindizes für Licht eines ersten Wellenlängenbereichs und Licht eines zweiten Wellenlängenbereichs aufweist. Parallel zur Aufnahme eines scharfen Bildes einer von einer Werkstückoberfläche reflektierten Lichtlinie kann ein scharfes Bild von einem weiteren Bereich der Werkstückoberfläche aufgenommen werden, der von der Lichtlinie beabstandet ist. Mithilfe der vorliegenden Erfindung wird der für Licht des zweiten Wellenlängenbereichs scharf abgebildete Bereich der Werkstückoberfläche von der scharf abgebildeten Lichtlinie des ersten Wellenlängenbereichs räumlich getrennt, um so den Vorteil der Scheimpflugabbildung mit einer Graubilddarstellung mit großer Tiefenschärfe zu kombinieren. Dadurch kann die Schärfentiefe, welche den Auswertebereich im Graubild stark eingeschränkt hat, auf den Messbereich der Scheimpflugabbildung erweitert werden.

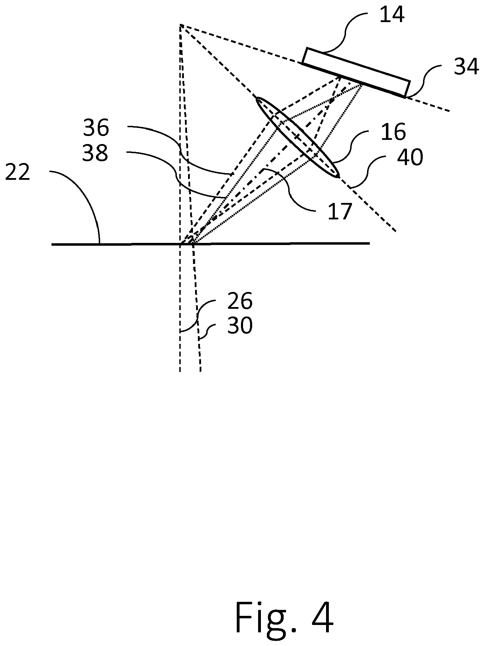

Fig. 4 zeigt eine schematische Ansicht eines Bildsensors und einer Optik der vorliegenden Erfindung.

Eine Optik, die einen Farbfehler, insbesondere einen Farblängsfehler bzw. eine (longitudinale) chromatische Aberration, und somit unterschiedliche Brechungsindizes für Licht verschiedener Wellenlängen bzw. Wellenlängenbereiche aufweist, wird im Rahmen dieser Offenbarung auch als "nicht korrigierte Optik" bezeichnet. Die Optik kann zumindest ein optisches Element, beispielsweise eine Linse, mit einem solchen Farbfehler aufweisen. Die nicht korrigierte Optik weist für Licht unterschiedlicher Wellenlängen bzw. Wellenlängenbereiche unterschiedliche Objektebenen auf. Mit anderen Worten weist die Optik für Licht unterschiedlicher Wellenlängenbereiche unterschiedliche Ebenen auf, die durch die Optik scharf auf eine vorgegebene Bildebene, beispielsweise eine Sensorebene eines Bildsensors, abgebildet werden. Es gibt also für jeden Wellenlängenbereich eine entsprechende Objekt- bzw. Fokusebene, die für Licht diesen Wellenlängenbereichs durch die Optik scharf auf diese Bildebene abgebildet wird.

Fig. 4 zeigt schematisch eine Werkstückoberfläche 22, eine Optik 16 und einen Bildsensor 14 mit einer Sensorebene 34. Wie in Fig. 4 gezeigt, gibt es eine erste Ebene 26, für die von der Optik 16 Licht 36 eines ersten Wellenlängenbereichs scharf auf die Sensorebene 34 abgebildet wird und eine zweite Ebene 30, für die von der Optik 16 Licht 38 eines zweiten Wellenlängenbereichs scharf die Sensorebene 34 abgebildet wird. Die Optik 16, die Sensorebene 34 und die erste Ebene 26 für Licht 36 des ersten Wellenlängenbereichs bzw. die zweite Ebene 30 für Licht 38 des zweiten Wellenlängenbereichs erfüllen die Scheimpflugbedingung. Das heißt, dass sich die erste Ebene 26, die zweite Ebene 30, eine Hauptebene 40 der Optik 14 und die Sensorebene 34 des Bildsensors 14 in einer Schnittlinie schneiden.

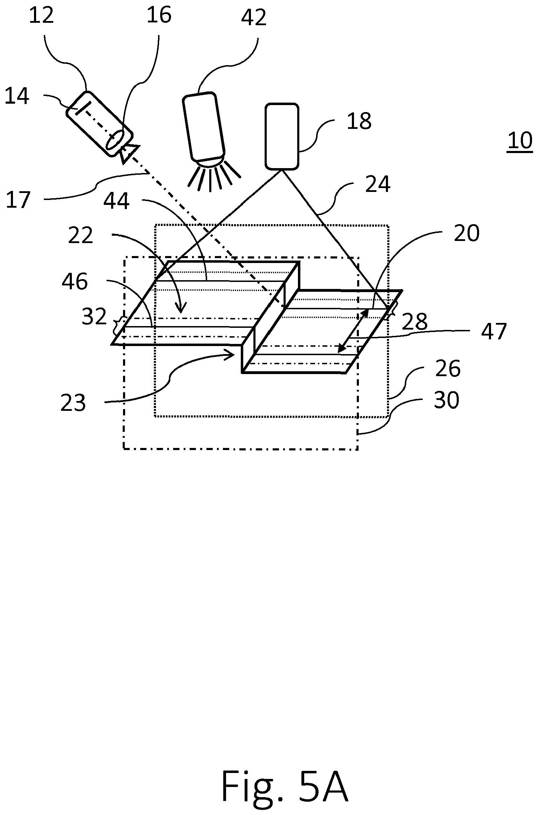

Fig. 5A zeigt eine schematische Ansicht einer Analysevorrichtung zum Analysieren einer Werkstückoberfläche gemäß Ausführungsformen der vorliegenden Erfindung.

Die Analysevorrichtung 10 ist eingerichtet, um ein Verfahren zum Analysieren einer Werkstückoberfläche für einen Laserbearbeitungsprozess gemäß Ausführungsformen der vorliegenden Erfindung durchzuführen.

Die Analysevorrichtung 10 ist eingerichtet, um ein zweidimensionales Bild von der Werkstückoberfläche 22 aufzunehmen, und um das aufgenommene Bild auszuwerten, um Merkmale der Werkstückoberfläche zu erkennen bzw. zu analysieren. Die Analysevorrichtung 10 ist insbesondere eingerichtet, um ein Lichtschnittverfahren bzw. ein Lichtschnitt-Triangulationsverfahren durchzuführen, um ein dreidimensionales Höhenprofil der Werkstückoberfläche 22 zu erfassen. Die Analysevorrichtung 10 kann beispielsweise eine Fügekante oder Stufe 23 der Werkstückoberfläche 22 oder eine Schweißnaht erkennen.

Die Analysevorrichtung 10 umfasst eine Sensorvorrichtung 12 mit einem Bildsensor 14 zum Aufnehmen eines Bildes und einer Optik 16 zum Abbilden von Licht auf den Bildsensor 14 und kann eine Auswerteeinheit (nicht gezeigt) zum Auswerten des vom Bildsensor 14 aufgenommenen Bildes umfassen. Der Bildsensors 14 ist ein flächiger oder zweidimensionaler optischer Sensor, beispielsweise ein CMOS- oder CCD-Sensor. Die Optik 16 kann als Linse oder Objektiv ausgebildet sein, die Erfindung ist hierauf aber nicht beschränkt.

Die Analysevorrichtung 10 umfasst ferner eine Lichtlinieneinheit 18 zum Erzeugen einer Lichtlinie 20 von Licht eines ersten Wellenlängenbereichs auf der Werkstückoberfläche 22. Die Lichtlinieneinheit 18 ist eingerichtet, um einen fächerförmigen Lichtstrahl 24 auf einen Bereich der Werkstückoberfläche 22 einzustrahlen, um die Lichtlinie 20 auf der Werkstückoberfläche 22 zu erzeugen. Die Lichtlinie 20 kann insbesondere senkrecht zu einem Verlauf der Fügekante oder Stufe 23 ausgerichtet sein. Die Lichtlinieneinheit 18 kann als Linienlaser ausgebildet sein. Dementsprechend können der Lichtstrahl 24 ein Laserstrahl und die Lichtlinie 20 eine Laserlinie sein, die Erfindung ist hierauf aber nicht beschränkt. Gemäß Ausführungsformen ist die Lichtlinieneinheit 18 eingerichtet, um einen blauen Laserstrahl mit einer Wellenlänge von ca. 400 nm bis 500 nm zu erzeugen. Gemäß Ausführungsformen ist die Lichtlinieneinheit 18 so angeordnet, dass sie den Lichtstrahl 24 senkrecht auf die Werkstückoberfläche 22 einstrahlen kann.

Die Analysevorrichtung 10 umfasst ferner eine Beleuchtungseinheit 42, die eingerichtet ist, um Licht eines zweiten Wellenlängenbereichs zu erzeugen und auf den Bereich der Werkstückoberfläche 22 einzustrahlen. Gemäß Ausführungsformen ist die Beleuchtungseinheit 42 als rote LED-Beleuchtung ausgebildet, und eingerichtet, um rotes Licht, z.B. mit einer Wellenlänge von ca. 620 nm bis 720 nm, zu erzeugen. Das Beleuchten des Bereichs der Werkstückoberfläche 22 mit Licht eines zweiten Wellenlängenbereichs kann großflächig und/oder ungerichtet erfolgen. Eine Anordnung oder Orientierung der Beleuchtungseinheit 42 kann beliebig sein, solange der Bereich der Werkstückoberfläche 22 beleuchtet wird. Der Bildsensor 14 ist für beide Wellenlängenbereiche empfindlich.

Die Optik 16 weist unterschiedliche Brechungsindizes für Licht des ersten Wellenlängenbereichs und Licht des zweiten Wellenlängenbereichs auf. Die Optik 16 kann als eine nicht korrigierte Optik bezeichnet werden. Eine optische Achse 17 der Optik 16 kann gemäß Ausführungsformen in einer Ebene liegen, die senkrecht zur Werkstückoberfläche 22 und parallel zu der Fügekante oder Stufe 23 (oder durch die Fügekante oder Stufe 23) verläuft.

Eine erste Ebene 26 wird durch einen Lichtaustrittspunkt des Lichts des ersten Wellenlängenbereichs aus der Lichtlinieneinheit 18 und der Lichtlinie 22 definiert. Mit anderen Worten wird die erste Ebene 26 von dem ebenen fächerförmigen Lichtstrahl 24 aufgespannt. Die erste Ebene 26, die Optik 16 und eine Sensorebene des Bildsensors 14 sind in der Scheimpfluganordnung angeordnet bzw. erfüllen die Scheimpflugbedingung. Dadurch werden alle Punkte der ersten Ebene 26 von der Optik 16 scharf auf die Sensorebene des Bildsensors 14 abgebildet. Die erste Ebene 26 kann auch als "Triangulationsebene" bezeichnet werden. Da die erste Ebene 26 auch die Lichtlinie 20 umfasst, wird von der Werkstückoberfläche 22 reflektiertes Licht der Lichtlinie 20 ebenfalls scharf auf dem Bildsensor 14 abgebildet. Die erste Ebene 26 schneidet die Werkstückoberfläche 22 in einer ersten Schnittlinie 44. Dadurch werden alle Punkte der Werkstückoberfläche 22 auf verschiedenen Ebenen, die die erste Ebene 26 schneiden, scharf abgebildet. Die erste Schnittlinie 44 der ersten Ebene 26 mit der Werkstückoberfläche 22 entspricht der Lichtlinie 20 bzw. fällt mit der Lichtlinie 20 zusammen.

Die erste Ebene 26 ist vorzugsweise im Wesentlichen senkrecht zu der Werkstückoberfläche 22 angeordnet. Mit anderen Worten kann eine optische Achse der Lichtlinieneinheit 18 im Wesentlichen senkrecht zur Werkstückoberfläche 22 verlaufen. Die optische Achse 17 der Optik 16 kann die erste Ebene 26 in einem spitzen Winkel schneiden.

Wie zuvor beschrieben wird die Werkstückoberfläche 22 von der Beleuchtungseinheit 42 auch mit Licht des zweiten Wellenlängenbereichs beleuchtet. Eine zweite Ebene 30, für die das Licht des zweiten Wellenlängenbereichs von der Optik 16 scharf auf die Sensorebene des Bildsensors 14 abgebildet wird, ist von der ersten Ebene 26 verschieden, wie mit Bezug auf Fig. 4 erläutert wurde. Die zweite Ebene 30, die Optik 16 und die Sensorebene des Bildsensors 14 sind für Licht des zweiten Wellenlängenbereichs ebenfalls in einer Scheimpfluganordnung angeordnet bzw. erfüllen die Scheimpflugbedingung. Die zweite Ebene 30 schneidet die Werkstückoberfläche 22 in einer zweiten Schnittlinie 46. Die zweite Schnittlinie 46 und die erste Schnittlinie 44 sind voneinander beabstandet. Der (kürzeste) Abstand der beiden Schnittlinien 44, 46 wird als Versatz 47 bezeichnet.

In Richtung der optischen Achse 17 der Optik 16 vor und hinter der Ebene 26 und vor und hinter der zweiten Ebene 30 ist zudem jeweils ein gewisser dreidimensionaler Schärfentiefenbereich vorhanden, innerhalb dessen Punkte von der Optik 16 hinreichend scharf auf dem Bildsensor 14 abgebildet werden. Mit anderen Worten umgibt ein erster Schärfentiefenbereich die erste Ebene 26 und ein zweiter Schärfentiefenbereich umgibt die zweite Ebene 30. Da die erste Ebene 26 die Werkstückoberfläche schneidet, werden innerhalb des ersten Schärfentiefenbereichs alle Punkte auf Ebenen, die die erste Ebene 26 schneiden, für reflektiertes Licht des ersten Wellenlängenbereichs scharf auf dem Bild abgebildet. Da die zweite Ebene 30 die Werkstückoberfläche schneidet, werden innerhalb des zweiten Schärfentiefenbereichs alle Punkte auf Ebenen, die die zweite Ebene 30 schneiden, für reflektiertes Licht des zweiten Wellenlängenbereichs scharf auf dem Bild abgebildet. Demnach wird ein erster Teilbereich 28 der Werkstückoberfläche 22, der die Schnittlinie 44 der ersten Ebene 26 mit der Werkstückoberfläche 22 umgibt, für Licht des ersten Wellenlängenbereichs hinreichend scharf auf den Bildsensor 14 abgebildet und ein zweiter Teilbereich 32 der Werkstückoberfläche 22, der die Schnittlinie 46 der zweiten Ebene 30 mit der Werkstückoberfläche 22 umgibt, wird für Licht des zweiten Wellenlängenbereichs hinreichend scharf auf den Bildsensor 14 abgebildet. Der Teilbereich 28 liegt in Richtung der optischen Achse 17 der Optik 16 vor und hinter der Schnittlinie 44. Der Teilbereich 32 liegt in Richtung der optischen Achse 17 der Optik 16 vor und hinter der Schnittlinie 46. Beide Teilbereiche 28, 32 sind gemäß Ausführungsformen voneinander beabstandet und schneiden oder überlappen sich nicht. Demnach liegt die Lichtlinie 20 des ersten Wellenlängenbereichs nicht im für Licht des zweiten Wellenlängenbereichs scharf abgebildeten zweiten Teilbereich 32.

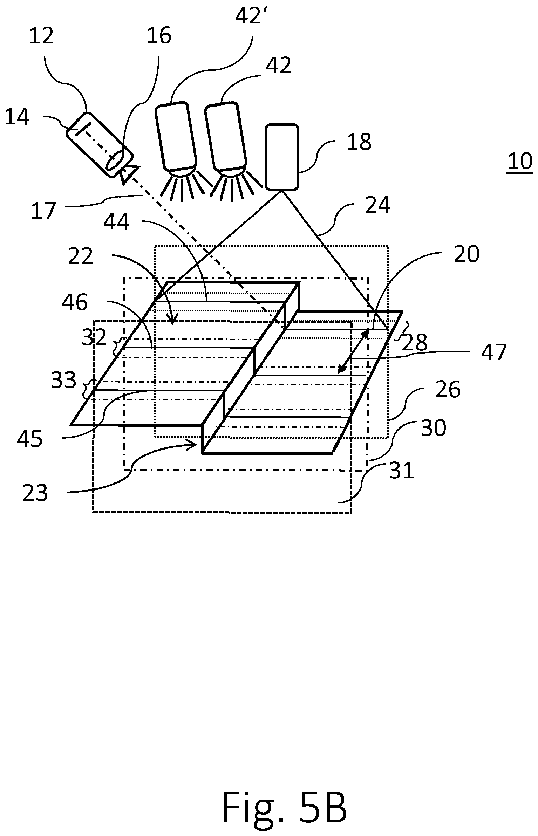

Selbstverständlich kann mit weiteren, voneinander verschiedenen oder voneinander beabstandeten zentralen Wellenlängen beleuchtet werden. Zentrale Wellenlänge bezeichnet hier die Wellenlänge, die in einem Wellenlängenbereich in der Mitte liegt. Hierfür kann für jede Beleuchtungswellenlänge jeweils eine Beleuchtungseinheit 42, 42` vorgesehen sein. Zusätzlich können eine Beleuchtungseinheit 42, die Licht in einem großen Wellenlängenbereich einstrahlt, beispielsweise eine Breitbandlichtquelle oder weiße Lichtquelle, sowie ein oder mehrere Filter, die mehrere voneinander beabstandete Wellenlängen bzw. Wellenlängenbereiche durchlassen, vorgesehen sein. Der Filter ist vor dem Bildsensor 14 angeordnet, d.h. er kann entweder an der Beleuchtungseinheit 42 angeordnet sein, oder vor oder nach der Optik 16. Wird mit Licht von mindestens einem weiteren, dritten Wellenlängenbereich beleuchtet, ergibt sich eine weitere, dritte Ebene 31, welche einen dritten Teilbereich 33 parallel versetzt zum zweiten Teilbereich 32 auf der Werkstückoberfläche erzeugt. Viele Wellenlängen, wie sie eine Beleuchtungseinheit mit kontinuierlichem Spektrum erzeugt, erzeugen viele solche Schnittebenen, die parallel zur zweiten Ebene 30 die Werkstückoberfläche schneiden. Jede Wellenlänge erzeugt einen Schärfentiefenbereich bzw. Teilbereich auf der Werkstückoberfläche parallel versetzt zum zweiten Teilbereich 32. Damit kann in Summe der Oberflächenbereich, welcher scharf abgebildet wird, vergrößert werden. Dies ist exemplarisch in Fig. 5B für eine Beleuchtung mit Licht eines dritten Wellenlängenbereichs durch eine weitere Beleuchtungseinheit 42` dargestellt, wodurch sich eine dritte Ebene 31 mit einer dritten Schnittlinie 45 ergibt, um die ein dritter Teilbereich 33 angeordnet ist. Beispielsweise kann der zweite Wellenlängenbereich 660 ± 5 nm und der dritte Wellenlängenbereich 720 ± 5 nm sein. Der erste Wellenlängenbereich kann 450 ± 5 nm sein. Die zentralen Wellenlängen der zweiten, dritten, etc. Wellenlängenbereiche, mit denen beleuchtet wird, sind vorzugsweise so gewählt, dass die jeweiligen Schärfentiefenbereiche bzw. Teilbereiche aneinander angrenzen.

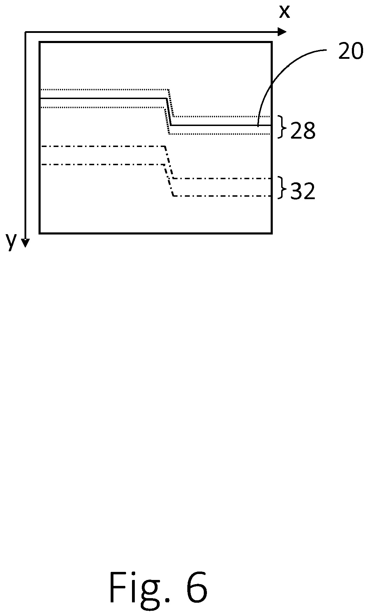

Fig. 6 zeigt schematisch und beispielhaft ein durch die Analysevorrichtung gemäß der vorliegenden Erfindung aufgenommenes Bild. Das Bild umfasst in einer Matrixanordnung eine Vielzahl von Pixeln (nicht gezeigt), die entlang einer ersten Richtung x in Spalten und entlang einer zweiten Richtung y in Zeilen angeordnet sind. Wie in Fig. 6 gezeigt, ist in dem durch den Bildsensor 14 aufgenommenen Bild die Laserlinie 20 abgebildet. Zudem sind der erste Teilbereich 28 und der zweite Teilbereich 32 der Werkstückoberfläche 22 markiert, die scharf im Bild abgebildet sind. Im Bild sind die beiden Teilbereiche 28, 32 ebenfalls voneinander beabstandet. Da die Lichtlinie 20 nicht im zweiten Teilbereich 32 liegt, wird die Aufnahme des Bildes von der Werkstückoberfläche im zweiten Teilbereich 32 nicht von der hellen Lichtlinie 20 gestört. Dadurch wird im aufgenommenen Bild der Kontrast für den zweiten Teilbereich 32 erhöht. Zudem wird für Licht des zweiten Wellenlängenbereichs der zweite Teilbereich 32 scharf auf dem Bildsensor 14 abgebildet.

Aus dem aufgenommenen Bild kann somit die scharf abgebildete Lichtlinie 20 extrahiert und ausgewertet werden, um das Lichtschnittverfahren zum Erfassen des dreidimensionalen Höhenprofils der Werkstückoberfläche durchzuführen. Basierend auf dem vorstehend beschriebenen Versatz 47 kann versetzt zur Lichtlinie der scharf abgebildete zweite Teilbereich 32 für das Licht des zweiten Wellenlängenbereichs aus dem Bild ausgelesen werden, um ein scharfes Bild, insbesondere ein Graubild, von dem zweiten Teilbereich 32 der Werkstückoberfläche 22 zu erhalten.

Das Auslesen des Bildsensors bzw. des Bildes ist so optimiert, dass die Lichtlinie 20 extrahiert wird und dazu versetzt bzw. zur Peakintensität der Lichtlinie 20 versetzt der zweite Teilbereich 32 ausgelesen wird. Der zweite Teilbereich 32 umfasst im Bild typischerweise zwischen 20 und 100 Zeilen, abhängig von der Abbildung durch die Optik und dem verwendeten Bildsensor. Die Punkte der Lichtlinie können über Kalibrationswerte direkt in Abstandswerte übertragen werden.

Gemäß Ausführungsformen ist die Analysevorrichtung 10 an einem Laserbearbeitungskopf zum Bearbeiten eines Werkstücks mittels eines Laserstrahls angeordnet. Die Analysevorrichtung kann beispielsweise an einem Gehäuse des Laserbearbeitungskopfes angebracht sein.

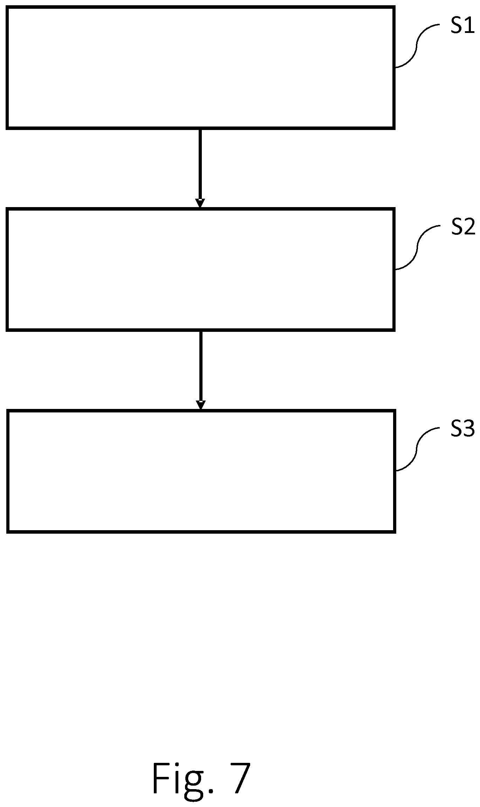

Fig. 7 zeigt ein Blockdiagramm eines Verfahrens zum Analysieren einer Werkstückoberfläche für einen Laserbearbeitungsprozess gemäß Ausführungsformen der vorliegenden Erfindung. Das Verfahren kann durch die zuvor mit Bezug auf Fig. 5A, 5B und 6 beschriebene Analysevorrichtung 10 durchgeführt werden.

Das Verfahren umfasst die folgenden Schritte: Zunächst wird eine Lichtlinie 20 von Licht eines ersten Wellenlängenbereichs in einen Bereich einer Werkstückoberfläche 22 eingestrahlt und der Bereich der Werkstückoberfläche 22 wird mit Licht eines zweiten Wellenlängenbereichs beleuchtet (S1). Anschließend wird ein Bild des Bereichs der Werkstückoberfläche 22 mittels einer Sensorvorrichtung 12 aufgenommen (S2). Die Sensorvorrichtung 12 umfasst einen Bildsensor 14 und eine Optik 16 zum Abbilden von Licht auf den Bildsensor 14, wobei die Optik 16 unterschiedliche Brechungsindizes für den ersten und zweiten Wellenlängenbereich aufweist und wobei eine erste Ebene 26, die durch die Lichtlinie 20 und einen Lichtaustrittspunkt des Lichts des ersten Wellenlängenbereichs definiert ist, die Optik 16 und der Bildsensor 14 in Scheimpfluganordnung angeordnet sind. Das Aufnehmen des Bildes erfolgt also basierend auf Licht des ersten Wellenlängenbereichs und des zweiten Wellenlängenbereichs, welches von dem Bereich der Werkstückoberfläche 22 reflektiert und von der Optik 16 auf den Bildsensor 14 abgebildet wird. Als nächstes wird das Bild zum Analysieren von Merkmalen der Werkstückoberfläche ausgewertet (S3).

Das Auswerten erfolgt basierend auf dem vorgegebenen Versatz zwischen der ersten Ebene 26 und einer zweiten Ebene 30, für die das Licht des zweiten Wellenlängenbereichs von der Optik 16 scharf auf die Sensorebene des Bildsensors 14 abgebildet wird. Der vorgegebene Versatz kann ein vorbestimmter oder bekannter Versatz sein. Der Versatz kann modelliert oder berechnet werden oder durch Messen bestimmt werden. Der Versatz kann in Bezug auf die Werkstückoberfläche oder entlang einer optischen Achse 17 der Optik 16 bzw. der Sensorvorrichtung 12 angegeben sein.

In dem aufgenommenen Bild sind, wie zuvor mit Bezug auf Fig. 5A, 5B und 6 beschrieben, der erste Teilbereich 28 für Licht des ersten Wellenlängenbereichs, welches von der Werkstückoberfläche 22 reflektiert wurde, und der zweite Teilbereich 32 für des zweiten Wellenlängenbereichs, welches von der Werkstückoberfläche reflektiert wurde, scharf abgebildet. Gemäß Ausführungsformen umfasst das Auswerten des Bildes das Auswerten des ersten Teilbereichs 28. Dies kann insbesondere das Auslesen von für den abgebildeten ersten Teilbereich 28 im Bild enthaltenen Helligkeitsinformationen für Licht des ersten Wellenlängenbereichs umfassen. Dies kann insbesondere das Bestimmen einer Position oder Form der abgebildeten Lichtlinie 22 umfassen. Darauf basierend kann ein Lichtschnittverfahren durchgeführt werden, um beispielsweise die Position und Lage von Merkmalen der Werkstückoberfläche, beispielsweise eine Fügekante, ein Fügespalt oder eine Schweißnaht, zu bestimmen. Das Auswerten des Bildes kann ferner das Auswerten des abgebildeten zweiten Teilbereichs 32 umfassen. Dies kann insbesondere das Auslesen von für den abgebildeten zweiten Teilbereich 32 im Bild enthaltenen Helligkeitsinformationen für Licht des zweiten Wellenlängenbereichs umfassen. Basierend darauf kann ein scharfes Graubild des zweiten Teilbereichs 32 erhalten werden. Basierend auf dem Graubild können weitere Merkmale der Werkstückoberfläche 22, insbesondere einer Schweißnaht, beispielsweise eine Rauigkeit, eine Farbe und Reflexionseigenschaften, erkannt und analysiert werden. Das Auswerten kann mittels bekannter Verfahren zur Bildverarbeitung und -analyse erfolgen. Das Auswerten des Bildes kann ein zeilenweises und/oder spaltenweises Auswerten des aufgenommenen Bildes umfassen. Das Auswerten kann mittels bekannter Machine Learning Verfahren erfolgen.

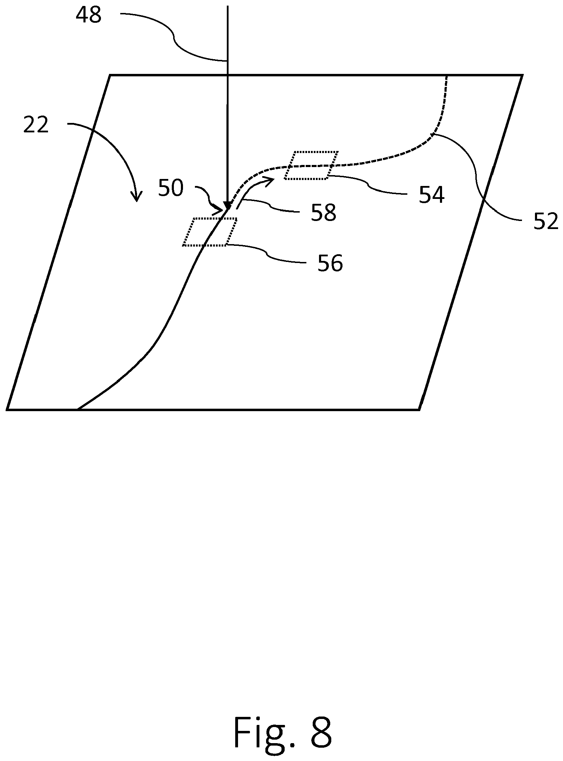

Das erfindungsgemäße Verfahren kann Teil eines Verfahrens zum Bearbeiten eines Werkstücks mittels eines Laserstrahls, beispielsweise ein Laserschweißen sein. Wie in Fig. 8 veranschaulicht umfasst das Verfahren zum Bearbeiten eines Werkstücks mittels eines Laserstrahls gemäß Ausführungsformen das Einstrahlen eines Laserstrahls 48 auf einen Punkt 50 entlang eines vorgegebenen Bearbeitungspfads 52 auf der Werkstückoberfläche 22. Zur Pre- und/oder Post-Prozess-Überwachung umfasst das Verfahren zum Bearbeiten des Werkstücks das erfindungsgemäße Verfahren zum Analysieren der Werkstückoberfläche 22. Das erfindungsgemäße Verfahren kann in einem Vorlauf 54 (Pre-Pozess) und/oder in einem Nachlauf 56 (Post-Prozess) des Punktes 50 bezüglich der Bearbeitungsrichtung 58 erfolgen. Im Vorlauf 54 kann beispielsweise ein Kantenversatz, ein Fügespalt und eine Fügekante erkannt bzw. detektiert werden. Im Nachlauf 56 kann eine Schweißnaht erkannt bzw. detektiert und analysiert werden und es können weitere Merkmale der Werkstückoberfläche 22 bzw. der Schweißnaht erfasst werden.

Gemäß Ausführungsformen kann das Verfahren zum Analysieren einer Werkstückoberfläche für einen Laserbearbeitungsprozess das Bewegen der Werkstückoberfläche relativ zur Sensorvorrichtung und das Wiederholen der zuvor beschriebenen S1 bis S3 umfassen. Mit anderen Worten können nacheinander mehrere Bilder von der Werkstückoberfläche 22 aufgenommen werden. Dazu können die jeweiligen, aus den mehreren Bildern ausgelesenen zweiten Teilbereiche 32 zu einem Graubild der Werkstückoberfläche 22 zusammengesetzt werden. Dadurch kann ein scharfes Graubild von einem größeren Bereich der Werkstückoberfläche 22 erhalten werden.

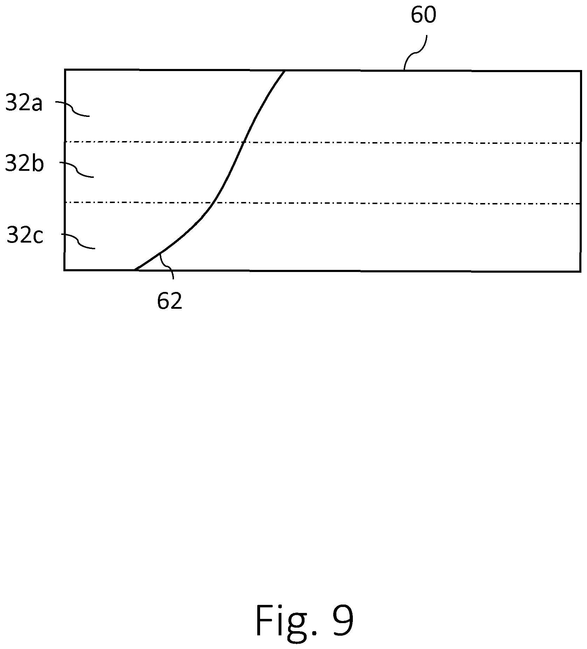

Ein solches zusammengesetztes Graubild ist in Fig. 9 beispielhaft veranschaulicht. Das zusammengesetzte Graubild 60 basiert auf drei zweiten Teilbereichen 32a, 32b, 32c, die aus den jeweiligen aufgenommenen Bildern ausgelesen und zum Graubild 60 zusammengesetzt wurden. Da jeder der zweiten Teilbereiche 32a, 32b, 32c scharf auf dem jeweiligen Bild abgebildet wurde, bildet das zusammengesetzte Graubild einen größeren Ausschnitt der Werkstückoberfläche 22 scharf ab. Das Graubild 60 zeigt ferner eine Schweißnaht 62. Das Zusammensetzen der Teilbereiche 32a, 32b, 32c zu dem Graubild 60 kann eine Bildverarbeitung, insbesondere eine perspektivische bzw. räumliche Transformation der zweiten Teilbereiche 32a, 32b, 32c umfassen.

Entsprechend können die jeweiligen, aus den mehreren Bildern ausgelesenen ersten Teilbereiche 28 zu einem dreidimensionalen Höhenprofil von einem größeren Bereich der Werkstückoberfläche 22 zusammengesetzt werden.

Die vorliegende Erfindung beruht auf dem Gedanken, dass eine Optik mit einem Farblängsfehler die Objektebenen für unterschiedliche Wellenlängen unterschiedlich abbildet. In diesem Fall liegt die Bildebene für jede Wellenlänge in einem anderen Abstand zu einer Hauptebene der Optik. Diese Eigenschaft kann bei einem Laserbearbeitungsprozess genutzt werden, um einen Bereich einer Werkstückoberfläche, der durch die Optik auf einem Bildsensor scharf abgebildet wird, von einer Abbildung einer Lichtschnittlinie für ein Lichtschnittverfahren zu trennen. Dadurch kann der Vorteil eines großen Messbereichs bei einer Scheimpfluganordnung bzw. -abbildung mit dem Vorteil einer großen Schärfentiefe bei einer Graubilddarstellung kombiniert werden. Dies bedeutet, dass die Schärfentiefe, welche einen Auswertebereich im Graubild stark eingeschränkt hat, auf den Messbereich der Scheimpflugabbildung erweitert wird.

### Bezugszeichenliste

- 10: Analysevorrichtung
- 12: Sensorvorrichtung
- 14: Bildsensor
- 16: Optik
- 17: optische Achse der Optik
- 18: Lichtlinieneinheit
- 20: Lichtlinie
- 22: Werkstückoberfläche
- 23: Werkstückstufe
- 24: Lichtstrahl
- 26: erste Ebene
- 28: erster Teilbereich
- 30: zweite Ebene
- 32: zweiter Teilbereich
- 31: dritte Ebene
- 33: dritter Teilbereich
- 34: Sensorebene
- 36: Licht eines ersten Wellenlängenbereichs
- 38: Licht eines zweiten Wellenlängenbereichs
- 40: Hauptebene
- 42: Beleuchtungseinheit
- 44: erste Schnittlinie
- 46: zweite Schnittlinie
- 45: dritte Schnittlinie
- 47: Versatz
- 48: Laserstrahl
- 50: Punkt auf dem Bearbeitungspfad
- 52: Bearbeitungspfad
- 54: Vorlauf
- 56: Nachlauf
- 58: Bearbeitungsrichtung
- 60: Graubild
- 62: Schweißnaht

## Patentansprüche

1. Verfahren zum Analysieren einer Werkstückoberfläche für einen Laserbearbeitungsprozess, umfassend die Schritte:
- Einstrahlen eines ebenen fächerförmigen Lichtstrahls von Licht eines ersten Wellenlängenbereichs zum Erzeugen einer Lichtlinie (20) auf die Werkstückoberfläche (22) und Beleuchten der Werkstückoberfläche (22) mit Licht mindestens eines zweiten Wellenlängenbereichs;
- Aufnehmen eines Bildes der Werkstückoberfläche (22) mittels einer Sensorvorrichtung (12), die einen Bildsensor (14) und eine Optik (16) zum Abbilden von Licht auf den Bildsensor (14) umfasst,
wobei eine erste Ebene (26), die durch die Ebene des fächerförmigen Lichtstrahls definiert ist, die Optik (16) und der Bildsensor (14) in Scheimpfluganordnung angeordnet sind; und
- Auswerten des Bildes zum Analysieren von Merkmalen der Werkstückoberfläche (22), **dadurch gekennzeichnet, dass**
die Optik (16) unterschiedliche Brechungsindizes für den ersten und zweiten Wellenlängenbereich aufweist, und
das Auswerten des Bildes zum Analysieren von Merkmalen der Werkstückoberfläche (22) auf einem vorgegebenen Versatz auf der Werkstückoberfläche zwischen der ersten Ebene (26) und einer zweiten Ebene (30), für die das Licht des zweiten Wellenlängenbereichs von der Optik (16) auf dem Bildsensor (14) abgebildet wird, basiert.

2. Verfahren gemäß Anspruch 1, wobei die erste Ebene (26) senkrecht zur Werkstückoberfläche (22) angeordnet ist und/oder wobei eine optische Achse (17) der Optik (16) und/oder eine optische Achse der Sensorvorrichtung (12) mit der ersten Ebene (26) einen spitzen Winkel bilden.

3. Verfahren gemäß einem der vorstehenden Ansprüche, wobei die Merkmale der Werkstückoberfläche (22) eine Schweißnaht oder eine Fügekante umfassen und eine optische Achse der Sensorvorrichtung (12) und/oder eine optische Achse (17) der Optik (16) in einer Ebene liegt, die senkrecht zur Werkstückoberfläche (22) und parallel zu der Schweißnaht oder Fügekante verläuft.

4. Verfahren gemäß einem der vorstehenden Ansprüche, wobei der der erste Wellenlängenbereich blaues Licht, vorzugsweise Licht mit einer Wellenlänge von 400 nm bis 500 nm, besonders bevorzugt von 450 nm, umfasst, und/oder wobei der zweite Wellenlängenbereich rotes Licht, vorzugsweise Licht mit einer Wellenlänge von 620 nm bis 720 nm, besonders bevorzugt von 660 nm, umfasst und/oder wobei ein dritter Wellenlängenbereich Licht mit einer Wellenlänge von 720 nm umfasst.

5. Verfahren gemäß einem der vorstehenden Ansprüche, wobei das Auswerten des Bildes umfasst:
- Auswerten von Intensitätsdaten von Licht des ersten Wellenlängenbereichs zum Erzeugen eines Höhenprofils der Werkstückoberfläche.

6. Verfahren gemäß einem der vorstehenden Ansprüche, wobei ein Teilbereich (32) der Werkstückoberfläche (22) eine Schnittlinie (44) der zweiten Ebene (30) mit der Werkstückoberfläche (22) umgibt, und wobei das Auswerten des Bildes umfasst:
- Auswerten von Intensitätsdaten von Licht des zweiten Wellenlängenbereichs in einem dem Teilbereich (32) entsprechenden Bereich des Bildes, um ein Graubild des Teilbereichs (32) zu erhalten.

7. Verfahren gemäß einem der vorstehenden Ansprüche, wobei die Werkstückoberfläche (22) ferner mit Licht mindestens eines dritten Wellenlängenbereichs beleuchtet wird und die Optik (16) unterschiedliche Brechungsindizes jeweils für den ersten, den zweiten und den dritten Wellenlängenbereich aufweist, und wobei das Auswerten des Bildes zum Analysieren von Merkmalen der Werkstückoberfläche (22) zudem basierend auf einem vorgegebenen Versatz auf der Werkstückoberfläche zwischen der ersten Ebene (26) und einer dritten Ebene (31), für die das Licht des dritten Wellenlängenbereichs von der Optik (16) auf dem Bildsensor (14) abgebildet wird, erfolgt.

8. Verfahren gemäß einem der vorstehenden Ansprüche, wobei die Werkstückoberfläche (22) anschließend relativ zur Sensorvorrichtung (12) bewegt wird und die vorstehenden Schritte wiederholt werden.

9. Verfahren zum Bearbeiten eines Werkstücks mittels eines Laserstrahls, insbesondere ein Laserschweißen oder ein Laserschneiden, umfassend:
- Einstrahlen eines Laserstrahls (48) auf einen Punkt (50) entlang eines Bearbeitungspfads (52) auf einer Werkstückoberfläche (22);
- das Verfahren gemäß einem der vorstehenden Ansprüche, wobei die Lichtlinie in Vorlauf (54) und/oder in Nachlauf (56) zu dem Punkt (50) auf die Werkstückoberfläche (22) eingestrahlt wird.

10. Analysevorrichtung (10) zum Analysieren einer Werkstückoberfläche, umfassend:
- eine Sensorvorrichtung (12) mit einem Bildsensor (14) zum Aufnehmen eines Bildes und einer Optik (16) zum Abbilden von Licht auf den Bildsensor (14);
- eine Lichtlinieneinheit (18) zum Einstrahlen einer Lichtlinie (20) eines ersten Wellenlängenbereichs und eine Beleuchtungseinheit (42) zum Einstrahlen von Licht mindestens eines zweiten Wellenlängenbereichs, und
- eine Auswerteeinheit zum Auswerten des von dem Bildsensor (14) aufgenommenen Bildes,
**dadurch gekennzeichnet, dass** die Optik (16) unterschiedliche Brechungsindizes für einen ersten Wellenlängenbereich und mindestens einen zweiten Wellenlängenbereich aufweist und dadurch, dass die Analysevorrichtung (10) zum Durchführen des Verfahrens zum Analysieren der Werkstückoberfläche (22) gemäß einem der Ansprüche 1 bis 8 eingerichtet ist.

11. Analysevorrichtung (10) gemäß Anspruch 10, wobei die Optik (16) eine Linse, eine Linsengruppe, eine Fokussierlinse, eine Fokussierlinsengruppe, ein Objektiv und/oder ein Zoomobjektiv umfasst.

12. Analysevorrichtung (10) gemäß Anspruch 10 oder 11, wobei der Bildsensor (14) einen Matrix-Bildsensor, einen zweidimensionalen optischen Sensor, einen Kamerasensor, einen CCD-Sensor, einen CMOS-Sensor, und/oder ein Photodioden-Array umfasst.

13. Analysevorrichtung (10) gemäß Anspruch 10, 11 oder 12, wobei die Lichtlinieneinheit (18) eine LED oder ein LED Array umfasst.

14. Laserbearbeitungskopf zum Bearbeiten eines Werkstücks mittels eines Laserstrahls, umfassend eine Analysevorrichtung gemäß einem der Ansprüche 10 bis 13.

15. Laserbearbeitungskopf gemäß Anspruch 14, wobei der Laserbearbeitungskopf eingerichtet ist, das Verfahren gemäß Anspruch 9 durchzuführen.

## Claims

1. A method for analyzing a workpiece surface for a laser machining process, comprising the steps of:
- radiating a flat fan-shaped light beam of light of a first wavelength range to generate a light line (20) on said workpiece surface (22) and illuminating said workpiece surface (22) with light of at least a second wavelength range;
- capturing an image of said workpiece surface (22) by means of a sensor device (12) which comprises an image sensor (14) and an optical system (16) for imaging light on said image sensor (14),
wherein a first plane (26) defined by the plane of the fan-shaped light beam, said optics (16) and said image sensor (14) are arranged in a Scheimpflug arrangement; and
- evaluating the image to analyze features of said workpiece surface (22),
**characterized in that**
said optics (16) has different refractive indices for the first and the second wavelength ranges, and
evaluating the image to analyze features of said workpiece surface (22) is based on a predetermined offset on the workpiece surface between the first plane (26) and a second plane (30) for which the light of the second wavelength range from said optics (16) is imaged on said image sensor (14).

2. The method according to claim 1, wherein the first plane (26) is arranged perpendicularly to said workpiece surface (22) and/or wherein an optical axis (17) of said optics (16) and/or an optical axis of said sensor device (12) form an acute angle with the first plane (26).

3. The method according to one of the preceding claims, wherein the features of said workpiece surface (22) include a weld seam or a joint edge, and an optical axis of said sensor device (12) and/or an optical axis (17) of said optics (16) lie in a plane which extends perpendicularly to said workpiece surface (22) and in parallel to the weld seam or joint edge.

4. The method according to one of the preceding claims, wherein the first wavelength range comprises blue light, preferably light with a wavelength of from 400 nm to 500 nm, particularly preferably of 450 nm, and/or wherein the second wavelength range comprises red light, preferably light with a wavelength of from 620 nm to 720 nm, particularly preferably of 660 nm, and/or wherein a third wavelength range comprises light with a wavelength of 720 nm.

5. The method according to one of the preceding claims, wherein evaluating the image comprises:
- evaluating intensity data of light of the first wavelength range for generating a height profile of the workpiece surface.

6. The method according to one of the preceding claims, wherein a partial area (32) of said workpiece surface (22) surrounds a line of intersection (44) of the second plane (30) with said workpiece surface (22), and wherein evaluating the image comprises:
- evaluating intensity data of light of the second wavelength range in an area of the image corresponding to the partial area (32) in order to obtain a gray image of the partial area (32).

7. The method according to one of the preceding claims, wherein said workpiece surface (22) is further illuminated with light of at least a third wavelength range and said optics (16) has different refractive indices for, respectively, the first, the second and the third wavelength ranges, and wherein evaluating the image for analyzing features of said workpiece surface (22) is also carried out based on a predetermined offset on the workpiece surface between the first plane (26) and a third plane (31) for which the light of the third wavelength range is imaged on said image sensor (14) by said optics (16).

8. The method according to one of the preceding claims, wherein said workpiece surface (22) is subsequently moved relative to said sensor device (12) and the above steps are repeated.

9. A method for machining a workpiece using a laser beam, in particular laser welding or laser cutting, comprising:
- radiating a laser beam (48) onto a point (50) along a machining path (52) on a workpiece surface (22);
- the method according to one of the preceding claims, wherein the light line is radiated onto said workpiece surface (22) in advance (54) and/or in the wake (56) of the point (50).

10. An analysis device (10) for analyzing a workpiece surface, comprising:
- a sensor device (12) with an image sensor (14) for capturing an image and optics (16) for imaging light on said image sensor (14);
- a light line unit (18) for radiating a light line (20) of a first wavelength range and an illumination unit (42) for radiating light of at least one second wavelength range, and
- an evaluation unit for evaluating the image captured by said image sensor (14),
**characterized in that** said optics (16) has different refractive indices for a first wavelength range and at least one second wavelength range, and **in that** said analysis device (10) is configured to carry out the method for analyzing the workpiece surface (22) according to one of claims 1 to 8.

11. The analysis device (10) according to claim 10, wherein said optics (16) comprises a lens, a lens group, a focusing lens, a focusing lens group, an objective and/or a zoom objective.

12. The analysis device (10) according to claim 10 or 11, wherein said image sensor (14) comprises a matrix image sensor, a two-dimensional optical sensor, a camera sensor, a CCD sensor, a CMOS sensor, and/or a photodiode array.

13. The analysis device (10) according to claim 10, 11 or 12, wherein said light line unit (18) comprises an LED or an LED array.

14. A laser machining head for machining a workpiece by means of a laser beam, comprising an analysis device according to one of claims 10 to 13.

15. The laser machining head according to claim 14, wherein said laser machining head is configured to carry out the method according to claim 9.

## Revendications

1. Procédé d'analyse d'une surface de pièce pour un processus d'usinage au laser, comportant les étapes consistant à :
- projeter un faisceau lumineux en éventail plat composé d'une lumière dans une première gamme de longueurs d'onde afin de générer une ligne lumineuse (20) sur la surface de pièce (22), et éclairer la surface de pièce (22) avec une lumière dans au moins une deuxième gamme de longueurs d'onde ;
- enregistrer une image de la surface de pièce (22) au moyen d'un dispositif à capteur (12) comprenant un capteur d'image (14) et une optique (16) afin de former une image à partir de la lumière sur le capteur d'image (14),
dans lequel un premier plan (26) défini par le plan du faisceau lumineux en forme d'éventail, l'optique (16) et le capteur d'image (14) sont agencés selon la loi de Scheimpflug ; et
- évaluer l'image pour analyser des caractéristiques de la surface de pièce (22),
**caractérisé en ce que**
l'optique (16) a différents indices de réfraction pour les première et deuxième gammes de longueurs d'onde, et
l'évaluation de l'image pour analyser des caractéristiques de la surface de pièce (22) est basée sur un décalage prédéterminé sur la surface de pièce entre le premier plan (26) et un deuxième plan (30), pour lequel une image est formée à partir de la lumière dans la deuxième gamme de longueurs d'onde, par l'optique (16) sur le capteur d'image (14).

2. Procédé selon la revendication 1, dans lequel le premier plan (26) est disposé perpendiculairement à la surface de pièce (22) et/ou dans lequel un axe optique (17) de l'optique (16) et/ou un axe optique du dispositif à capteur (12) forme un angle aigu avec le premier plan (26).

3. Procédé selon l'une des revendications précédentes, dans lequel les caractéristiques de la surface de pièce (22) comprennent un cordon de soudure ou un bord d'assemblage et un axe optique du dispositif à capteur (12) et/ou un axe optique (17) de l'optique (16) se situe dans un plan qui s'étend perpendiculairement à la surface de pièce (22) et parallèlement au cordon de soudure ou au bord d'assemblage.

4. Procédé selon l'une des revendications précédentes, incluant de la lumière bleue dans la première gamme de longueurs d'onde, de manière préférée de la lumière à une longueur d'onde de 400 nm à 500 nm, de manière particulièrement préférée de 450 nm, et/ou incluant de la lumière rouge dans la deuxième gamme de longueurs d'onde, de manière préférée de la lumière à une longueur d'onde de 620 nm à 720 nm, de manière particulièrement préférée de 660 nm, et/ou incluant de la lumière dans une troisième gamme de longueurs d'onde à une longueur d'onde de 720 nm.

5. Procédé selon l'une des revendications précédentes, dans lequel l'évaluation de l'image comprend l'étape consistant à :
- évaluer des données d'intensité de la lumière dans la première gamme de longueurs d'onde afin de générer un profil de hauteur de la surface de pièce.

6. Procédé selon l'une des revendications précédentes, dans lequel une zone partielle (32) de la surface de pièce (22) entoure une ligne d'intersection (44) du deuxième plan (30) avec la surface de pièce (22), et dans lequel l'évaluation de l'image comporte l'étape consistant à :
- évaluer des données d'intensité de la lumière dans la deuxième gamme de longueurs d'onde dans une zone de l'image correspondant à la zone partielle (32), afin d'obtenir une image en niveaux de gris de la zone partielle (32).

7. Procédé selon l'une des revendications précédentes, dans lequel la surface de pièce (22) est en outre éclairée avec de la lumière dans au moins une troisième gamme de longueurs d'onde et l'optique (16) a différents indices de réfraction, pour les première, deuxième et troisième gammes de longueurs d'onde, respectivement, et dans lequel l'évaluation de l'image pour analyser des caractéristiques de la surface de pièce (22) est en outre réalisée sur la base d'un décalage prédéterminé de la surface de pièce entre le premier plan (26) et un troisième plan (31) pour lequel une image est formée à partir de la lumière dans la troisième gamme de longueurs d'onde, par l'optique (16) sur le capteur de l'image (14).

8. Procédé selon l'une des revendications précédentes, dans lequel la surface de pièce (22) est ensuite déplacée par rapport au dispositif à capteur (12) et les étapes précédentes sont répétées.

9. Procédé pour usiner une pièce au moyen d'un faisceau laser, en particulier un soudage au laser ou un découpage au laser, comprenant :
- la projection d'un faisceau laser (48) sur un point (50) le long d'un trajet d'usinage (52) sur une surface de pièce (22) ;
- le procédé selon l'une des revendications précédentes, dans lequel la ligne lumineuse est projetée en avant (54) et/ou en arrière (56) du point (50) sur la surface de pièce (22).

10. Dispositif d'analyse (10) pour analyser une surface de pièce, comprenant :
- un dispositif à capteur (12) comportant un capteur d'image (14) pour enregistrer une image et une optique (16) pour former une image à partir de la lumière sur le capteur d'image (14) ;
- une unité de ligne lumineuse (18) pour projeter une ligne lumineuse (20) dans une première gamme de longueurs d'onde et une unité d'éclairage (42) pour projeter de la lumière dans au moins une deuxième gamme de longueurs d'onde, et
- une unité d'évaluation pour évaluer l'image enregistrée par le capteur d'image (14), **caractérisé en ce que** l'optique (16) a différents indices de réfraction pour une première gamme de longueurs d'onde et au moins une deuxième gamme de longueurs d'onde, et **en ce que** le dispositif d'analyse (10) est conçu pour mettre en oeuvre le procédé d'analyse de la surface de pièce (22) selon l'une des revendications 1 à 8.

11. Dispositif d'analyse (10) selon la revendication 10, dans lequel l'optique (16) comprend une lentille, un groupe de lentilles, une lentille de focalisation, un groupe de lentilles de focalisation, un objectif et/ou un objectif zoom.

12. Dispositif d'analyse (10) selon la revendication 10 ou 11, dans lequel le capteur d'image (14) comprend un capteur d'image matricielle, un capteur optique en 2D, un capteur de caméra, un capteur CCD, un capteur CMOS et/ou un réseau de photodiodes.

13. Dispositif d'analyse (10) selon la revendication 10, 11 ou 12, dans lequel l'unité de ligne lumineuse (18) comprend une LED ou un réseau de LED.

14. Tête d'usinage au laser pour usiner une pièce au moyen d'un faisceau laser, comprenant un dispositif d'analyse selon l'une des revendications 10 à 13.

15. Tête d'usinage au laser selon la revendication 14, dans laquelle la tête d'usinage au laser est conçue pour mettre en oeuvre le procédé selon la revendication 9.
